# EUROPEAN PATENT APPLICATION

(11) **EP 4 815 557 A1**
(43) Date of publication of application: **30.09.2026**
(21) Application number: 23959270.2
(22) Date of filing: 24.11.2023
(51) Int. Cl.: H04W 28/12

(54) **DATA TRANSMISSION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN)
(74) Representative: Mewburn Ellis LLP
(86) International application number: PCT/CN2023/134044
(87) International publication number: WO 2025/107300

(57) **Abstract**

A method for data transmission, a terminal device, and a network device are provided in the disclosure. The method includes the following. The terminal device sends first information and/or second information to the network device, where the first information is associated with first data, the second information is associated with second data, the first data is to be processed by the network device, and the second data is to be forwarded by the network device.

## Description

### TECHNICAL FIELD

This disclosure relates to the field of communication technology, and in particular, to a method for data transmission, a terminal device, and a network device.

### BACKGROUND

In general, data routing manners in communication systems are predefined by protocols. For example, any parameter contained in any type of message has a fixed routing rule. How to improve the performance of methods for data transmission, such as improving the flexibility of data transmission and reducing the complexity of extending the method for data transmission, is a problem that needs to be solved.

### SUMMARY

A method for data transmission, a terminal device, and a network device are provided in the disclosure. Various aspects involved in the disclosure are introduced below.

In a first aspect, a method for data transmission is provided. The method includes the following. A terminal device sends first information and/or second information to a network device. The first information is associated with first data. The second information is associated with second data. The first data is to be processed by the network device. The second data is to be forwarded by the network device.

In a second aspect, a method for data transmission is provided. The method includes the following. A network device receives first information and/or second information sent by a terminal device. The first information is associated with first data. The second information is associated with second data. The first data is to be processed by the network device. The second data is to be forwarded by the network device.

In a third aspect, a terminal device is provided. The terminal device includes a sending unit configured to send first information and/or second information to a network device. The first information is associated with first data. The second information is associated with second data. The first data is to be processed by the network device. The second data is to be forwarded by the network device.

In a fourth aspect, a network device is provided. The network device includes a receiving unit configured to receive first information and/or second information sent by a terminal device. The first information is associated with first data. The second information is associated with second data. The first data is to be processed by the network device. The second data is to be forwarded by the network device.

In a fifth aspect, a terminal device is provided. The terminal device includes a processor, a memory, and a communication interface. The memory is configured to store one or more computer programs. The processor is configured to invoke the computer programs in the memory to cause the terminal device to perform some or all of the steps in the method in the first aspect.

In a sixth aspect, a network device is provided. The network device includes a processor, a memory, and a communication interface. The memory is configured to store one or more computer programs. The processor is configured to invoke the computer programs in the memory to cause the network device to perform some or all of the steps in the method in the second aspect.

In a seventh aspect, a communication system is provided in embodiments of the disclosure. The system includes the above terminal device and/or network device. In another possible design, the system may further include another device that interacts with the terminal device or the network device in the solution provided by embodiments of the disclosure.

In an eighth aspect, a computer-readable storage medium is provided in embodiments of the disclosure. The computer-readable storage medium stores a computer program. The computer program is operable with a terminal device to perform some or all of the steps in the method in the above first aspect or second aspect.

In a ninth aspect, a computer program product is provided in embodiments of the disclosure. The computer program product includes a non-transitory computer-readable storage medium storing a computer program. The computer program is operable with a terminal device to perform some or all of the steps in the method in the above first aspect or second aspect. In some implementations, the computer program product may be a software installation package.

In a tenth aspect, a chip is provided in embodiments of the disclosure. The chip includes a memory and a processor. The processor is configured to invoke and execute a computer program in the memory to perform some or all of the steps in the method in the above first aspect or second aspect.

In embodiments of the disclosure, information associated with data to be processed by the network device, such as the first information, or information associated with data to be forwarded by the network device, such as the second information, is introduced, such that data to-be-transmitted is decoupled from a data transmission path, which helps to improve data transmission performance. For example, the second information may include target node information for the data, and the network device may select the data transmission path based on the target node information, which helps to improve the flexibility of the data transmission path. For another example, the first information may include a functional entity for processing the data. When the network device, for example, a radio resource control (RRC) protocol layer receives the first information, the RRC protocol layer does not need to decode all parameters, but only needs to forward the information associated with the first data to a corresponding functional entity for processing, which helps to reduce the complexity of product development for the RRC protocol layer.

### BRIEF DESCRIPTION OF THE DRAWINGS

FIG. 1 is a schematic diagram of a wireless communication system to which embodiments of the disclosure are applicable.
FIG. 2 is a schematic flowchart of a method for data transmission provided by embodiments of the disclosure.
FIG. 3 is a schematic structural diagram of a terminal device provided by embodiments of the disclosure.
FIG. 4 is a schematic structural diagram of a network device provided by embodiments of the disclosure.
FIG. 5 is a schematic structural diagram of an apparatus provided by embodiments of the disclosure.

### DETAILED DESCRIPTION

The technical solutions in the disclosure are described below with reference to the accompanying drawings.

### Communication System Architecture

The technical solutions of embodiments of the disclosure are applicable to various communication systems, for example, a global system of mobile communication (GSM) system, a code division multiple access (CDMA) system, a wideband CDMA (WCDMA) system, a general packet radio service (GPRS), a long term evolution (LTE) system, an advanced LTE (LTE-A) system, an LTE frequency division duplex (FDD) system, an LTE time division duplex (TDD), a new radio (NR) system, an evolved systems of an NR system, an LTE-based access to unlicensed spectrum (LTE-U) system, an NR-based access to unlicensed spectrum (NR-U) system, a non-terrestrial network (NTN) system, a terrestrial network (TN) system, a universal mobile telecommunication system (UMTS), a wireless local area network (WLAN), a wireless fidelity (WIFI), a 5th-generation (5G) system, etc. The technical solutions provided in the disclosure may also be applied to other communication systems, such as a future communication system, for example, a sixth-generation (6G) mobile communication system, or a satellite communication system.

Generally speaking, a conventional communication system supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication. Embodiments of the disclosure can also be applied to these communication systems.

The communication systems in embodiments of the disclosure may be applied to a carrier aggregation (CA) scenario, or may be applied to a dual connectivity (DC) scenario, or may be applied to a standalone (SA) deployment scenario.

The communication systems in embodiments of the disclosure may be applied to an unlicensed spectrum, and the unlicensed spectrum may be regarded as a shared spectrum. Alternatively, the communication systems in embodiments of the disclosure may be applied to a licensed spectrum, and the licensed spectrum may be regarded as a dedicated spectrum.

An important feature of a communication system architecture (e.g., a 5G system architecture) is that the communication system architecture is a service-based architecture, that is, a network element (service provider) in a core network can provide specific services and offer them to other network elements (consumers) through a defined application programming interface (API).

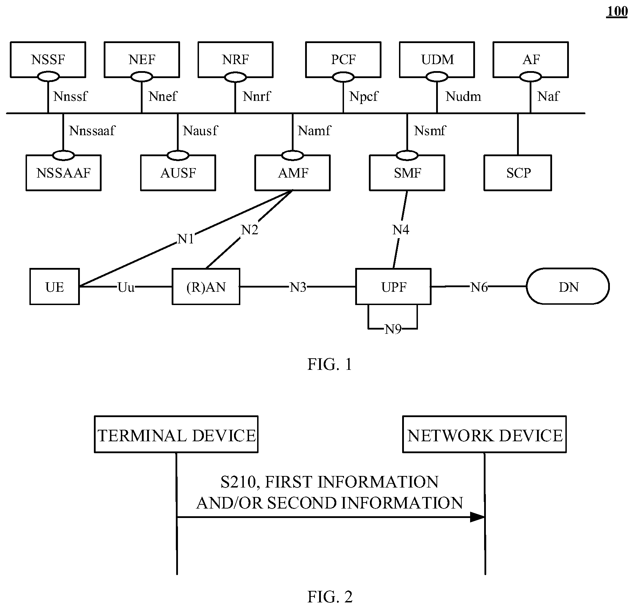

FIG. 1 exemplarily illustrates a schematic architectural diagram of a wireless communication system to which embodiments of the disclosure are applicable. For example, the communication system is the 5G system architecture, the wireless communication system may include multiple network elements, nodes, or devices, such as a terminal device, an access network (AN) device, a user plane function (UPF) network element, an access and mobility management function (AMF) network element, a session management function (SMF) network element, a policy control function (PCF) network element, and an application function (AF) network element. The wireless communication system may further include a data network (DN), etc.

An exemplary explanation is provided below for the respective functions of parts or network elements involved in the wireless communication system within a 5G network.

Terminal device: The terminal device may also be referred to as a user equipment (UE), an access terminal, a subscriber unit, a subscriber station, a mobile site, a mobile station (MS), a mobile terminal (MT), a remote station, a remote terminal, a mobile device, a user terminal, a terminal, a wireless communication device, a user agent, or a user apparatus. The terminal device in embodiments of the disclosure may also refer to a device providing a user with voice and/or data connectivity and capable of connecting people, objects, and machines, such as a handheld device or a vehicle-mounted device having a wireless connection function. The terminal device in embodiments of the disclosure may be a mobile phone, a tablet computer (Pad), a notebook computer, a palmtop computer, a mobile internet device (MID), a wearable device, a vehicle device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc.

Access network device: The access network device may be configured to provide a network access function for an authorized terminal device in a specific area, and can use transmission channels of different quality according to a level, a service requirement, and the like of the terminal device. The access network device can manage a wireless resource, and provide an access service for the terminal device, so as to implement forwarding of a control signal and data between the terminal device and the core network.

The access network device may be a device in a wireless network. The access network device may also be referred to as a radio access network (RAN) device or a network device. For example, the access network device may be a base station. The access network device in embodiments of the disclosure may refer to an RAN node (or device) that connects the terminal device to the wireless network. The base station may broadly cover various names in the following, or may be replaced with a name in the following, for example, a NodeB (NB), an evolved NodeB (eNB), a next generation NodeB (gNB), a relay station, an access point, a transmitting and receiving point (TRP), a transmitting point (TP), a master station MeNB, a secondary station SeNB, a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a centralized unit (CU), a distributed unit (DU), a centralized unit-control plane (CU-CP), a centralized unit-user plane (CU-UP), a positioning node, etc. The base station may be a macro base station, a micro base station, a relay node, a donor node, or the like, or a combination thereof. The base station may also refer to a communication module, a modem, or a chip disposed in the device or apparatus described above. The base station may also be a mobile switching center, a device that functions as a base station in D2D, V2X, M2M communications, a network-side device in a 6G network, a device that functions as a base station in the future communication system, etc. The base station may support networks of the same access technology or different access technologies. A specific technology and a specific device configuration used by the access network device are not limited in embodiments of the disclosure.

The base station may be stationary, or may be mobile. For example, a helicopter or an unmanned aerial vehicle may be configured to function as a mobile base station, and one or more cells may move depending on a location of the mobile base station. In another example, the helicopter or the unmanned aerial vehicle may be configured to serve as a device in communication with another base station.

In some deployments, the access network device in embodiments of the disclosure may refer to the CU or the DU, or the access network device may include the CU and the DU. The gNB may further include the AAU.

The access network device and the terminal device can be deployed on land, which includes indoor or outdoor, handheld, or in-vehicle. The access network device and the terminal device can also be deployed on water. The access network device and the terminal device can also be deployed on airplanes, balloons, and satellites in the air. Embodiments of the disclosure do not limit the scenarios in which the access network device and the terminal device are located.

UPF network element: The UPF is a user plane function in the core network. The UPF is responsible for forwarding and receiving user data (e.g., a service data flow) in the terminal device. The UPF can be connected to the access network device (e.g., the base station) and an external data network for data transmission. Exemplarily, the UPF may receive the user data from the DN, and transmit the user data to the terminal device through the access network device. Alternatively, the UPF may receive the user data from the terminal device through the access network device, and then forward the user data to the DN. A transmission resource and a scheduling function in the UPF that provide a device for the terminal are managed and controlled by the SMF. In some embodiments, the UPF may be divided into an intermediate-UPF (I-UPF) and an anchor-UPF (A-UPF). The I-UPF is connected to the access network, the A-UPF is a UPF of a session anchor, and the A-UPF may also be referred to as a PDU session anchor (PSA).

AMF network element: The AMF is a mobility management function in the core network. The AMF may be used to implement other functions of a mobility management entity (MME) other than session management, such as lawful monitoring or access authorization (or authentication), etc. In some embodiments, in addition to performing mobility management on the terminal device, the AMF may be further responsible for forwarding of a message related to session management between the terminal device and the SMF.

SMF network element: The SMF is a session management function in the core network. The SMF is mainly responsible for session management, internet protocol (IP) addresses allocation and management of the terminal device, selection of a manageable UPF, policy control, a termination point of a charging function interface, downlink data notification, configuration of routing information for the UPF, etc.

PCF network element: The PCF is a policy management function in the core network.

The PCF is responsible for formulation of policies related to mobility management, session management, charging, and the like of the terminal device. Specifically, the PCF can provide policy rule information and the like for a functional network element (e.g., the AMF network element, the SMF network element, etc.) on a control plane, so as to manage and control mobility management, session management, and the like of the terminal device.

AF network element: The AF mainly supports interaction with a 3rd generation partnership project (3GPP) core network to provide services, for example, influencing a data routing decision, the PCF, or providing some third-party services to a network side. In other words, the AF may be mainly used to transfer a requirement of an application side on the network side. In some embodiments, the AF may be an internal application of an operator, such as an application using an IP multimedia subsystem (IMS) technology. In some embodiments, the AF may be regarded as a third-party server, such as an application server on an internet, which provides related service information, including providing the PCF with quality of service (QoS) requirement information corresponding to a service, and transmitting user plane data information of a service to the A-UPF. In some embodiments, the AF may also be a content provider (CP). In some embodiments, if the AF is an internal AF of the operator and is within a same trusted domain as other network functions (NFs), the AF may directly interact with and access other NFs, and if the AF is not within the trusted domain, the AF is required to access other NFs through other network elements (e.g., an NEF network element described below).

DN: The DN refers to a network that may be used to provide transmission data. The DN may be a private network, such as a local area network, or may be an external network that is not controlled by the operator, such as the internet, or may be a special-purpose network deployed by operators altogether, such as a network providing an IMS service.

Optionally, the wireless communication system may further include other network elements, such as a unified data management (UDM) network element, an authentication server function (AUSF) network element, a network slice selection function (NSSF) network element, a network exposure function (NEF) network element, a network data analytics function (NWDAF) network element, and an NF repository function (NRF) network element, which is not limited in embodiments of the disclosure.

The UDM network element is a subscription database in the core network. The UDM has functions such as generation and storage of user subscription data in the network (e.g., the 5G network), management of authentication data, etc., and supports interaction with an external third-party server. The AUSF network element may be used to receive a request for authenticating the terminal device from the AMF. The AUSF requests a key from the UDM and then forwards the issued key to the AMF for authentication. The NSSF network element may be used for network slice selection.

The NEF network element may be responsible for managing exposure of network data from a 5G network element. An external untrusted application is required to access data internal to the core network through the NEF, so as to ensure security of the 3GPP network. In some embodiments, the NEF network element may further have functions such as QoS capability exposure for the external application, event subscription, AF request distribution, etc. The NWDAF network element can collect data from various network elements, network management systems, and the like in the core network, to perform big data statistics and analysis or intelligent data analysis, so that an analysis result or predicted data from the network side is obtained, which assists each network element in more effective control of terminal devices based on the data analysis results.

The NSSF network element is a network slice selection function in the core network, The NSSF supports functions of: selecting a network slice instance set serving the UE; determining allowed network slice selection assistance information (NSSAI) and, when necessary, determining a mapping to subscribed single-network slice selection assistance information (S-NSSAI); determining a configured NSSAI and, when necessary, determining a mapping to a subscribed S-NSSAI; determining an AMF set that may be used to query the UE, or determining a list of candidate AMFs based on configuration.

The AUSF network element can be used to receive a request for authenticating the terminal from the AMF, the AUSF requests a key from the UDM and then forwards the issued key to AMF for authentication processing.

The NEF network element can be used for capability exposure. That is, based on the NEF, network capabilities can be output to the external network. The external untrusted application accesses data internal to the core network through the NEF to ensure network security. The NEF may further have functions such as QoS capability exposure for the external application, event subscription, AF request distribution, etc.

The NRF network element can be used for core network element registration, management, and status monitoring, thereby enabling automated management of core network elements. When a core network element starts up, the core network element needs to register with the NRF to provide services. Registration information may include, for example, a type, an address, a service list, and the like of the core network element.

The NWDAF network element can collect data from various network elements, network management system, and the like in the core network, to perform big data statistics and analysis or intelligent data analysis, so that the analysis result or the predicted data from the network side is obtained, which assists each network element in more effective control of terminal devices access based on the data analysis results.

It can be understood that each of the above functional entities in the core network may also be referred to as the network element, and the disclosure is not limited in this regard. Exemplarily, a UPF entity may also be referred to as a UPF network element, and an AMF entity may also be referred to as an AMF network element, etc.

It can also be understood that in some embodiments, an XX functional entity or an XX network element may also be directly abbreviated as "XX". For example, an UPF entity (or an UPF network element) may be abbreviated as "UPF", and an AMF entity (or an AMF network element) may be abbreviated as "AMF". For ease of description, "XX" (such as the UPF, the AMF, etc.) mentioned in embodiments of the disclosure may refer to the XX entity or the XX network element, which will not be repeated hereafter.

In the communication system illustrated in FIG. 1, communication between various parts or functional entities may be performed through interfaces. For example, the terminal device can establish an access stratum (AS) connection with the AN through a Uu interface to exchange AS messages and perform wireless data transmission. The terminal device can establish a non-access stratum (NAS) connection with the AMF through an N1 interface to exchange NAS messages. The AN can be connected to the AMF through an N2 interface for transmitting radio bearer control information from the core network side to the AN. The UPF can perform data transmission with the AN through an N3 interface, and can perform data transmission with the DN through an N6 interface, etc. For interfaces for connections between other parts or functional entities, reference can be made to FIG. 1, which is not repeated herein.

It can be understood that the network architectures described above are merely exemplary illustrations. The network architectures applicable to embodiments of the disclosure are not limited in this regard. Any network architecture that can implement the functions of the above functional entities is applicable to embodiments of the disclosure.

It can be understood that the access network device, the AMF, the SMF, the UPF, the PCF, and the like illustrated in FIG. 1 are merely names, and the names do not limit the devices. In the 5G network and other future networks, an entity corresponding to the access network device, the AMF, the SMF, the UPF, the PCF, and the like may also have other names, which are not specifically limited in embodiments of the disclosure.

It can be understood that names of interfaces between the functional entities illustrated in FIG. 1 are merely examples. In specific implementations, the names of interfaces between the functional entities may also be other names, such as names of interfaces between functional entities in the 6G network, which are not specifically limited in embodiments of the disclosure.

It can be understood that all or part of the functions of the communication device in the disclosure may be implemented by a software function running on a hardware, or may be implemented by a virtualized function instantiated on a platform (e.g., a cloud platform).

It can be understood that the network architectures described in embodiments of the disclosure are intended to illustrate more clearly the technical solutions of embodiments of the disclosure, and do not constitute limitation on the technical solutions provided in embodiments of the disclosure. Those skilled in the art can appreciate that, with the evolution of network architectures, embodiments of the disclosure are equally applicable to similar technical problems.

Taking data transmission between the terminal device and the access network device as an example, a control mode of data transmission in a communication system, such as the communication system illustrated in FIG. 1, is described.

Data routing modes of an access network system are all predefined by protocols. That is, any parameter contained in any type of message has a fixed routing rule.

Fixed parameters contained in fixed messages all correspond to fixed transmission paths, which limits the paths for data transmission and lacks flexibility. For example, interaction data between the terminal device and a newly defined network element node of the core network device must be forwarded through the AMF network element. In addition, in the above data routing mode, data to-be-transmitted needs to be bound to the fixed messages. In this case, the workload of standard formulation is increased, for example, a message type that carries a newly-introduced functional parameter needs to be defined in the standard, which in turn increases the workload of product development, for example, the type of message to carry the newly-introduced functional parameter needs to be considered during product development, thereby resulting in complexity in implementation.

To address the above problems, a method for data transmission is provided in embodiments of the disclosure. In the method information associated with data to be processed by the network device, such as first information, or information associated with data to be forwarded by the network device, such as second information is introduced, such that data to-be-transmitted is decoupled from a data transmission path, which helps to improve data transmission performance. For example, the second information may include target node information for the data, and the network device may select the data transmission path according to the target node information, which helps to improve the flexibility of the data transmission path. For another example, the first information may include a functional entity for processing the data. When the network device, for example, an RRC protocol layer receives the first information, the RRC protocol layer does not need to decode all parameters, but only needs to forward the information associated with the first data to a corresponding functional entity for processing, which helps to reduce the complexity of product development for the RRC protocol layer.

FIG. 2 is a schematic flowchart of a method for data transmission provided by embodiments of the disclosure. The method illustrated in FIG. 2 can be applied to data transmission between a terminal device and an access network device (i.e., a network device), and can also be applied to data transmission where a terminal device communicates with another device, such as a core network device, through a network device. The terminal device may be any of the terminal devices mentioned above, the network device may be any of the network devices mentioned above, and the core network device may be any of the core network devices mentioned throughout the disclosure. The method illustrated in FIG. 2 is described below from a perspective of interaction between the terminal device and the network device.

The method illustrated in FIG. 2 may include step S210. In step S210, the terminal device sends first information and/or second information to the network device. Alternatively, the network device receives the first information and/or second information sent by the terminal device.

The first information is associated with first data. For example, the first information may include the first data and control information associated with the first data. The first data is data to be processed by the network device, or in other words, the first data is data that needs to be processed by the network device. For example, the target node for the first data is the network device, or the target node for the first data is a functional entity in the network device. As an example, the target node for the first data may be a centralized unit (CU) or a distributed unit (DU) in the network device, or the target node for the first data may be an RRC layer, a packet data convergence protocol (PDCP) layer, a service data adaptation protocol (SDAP) layer, a backhaul adaptation protocol (BAP) layer, a radio link control (RLC) layer, a medium access control (MAC) layer, a physical layer (PHY), or an artificial intelligence/machine learning (AI/ML) functional entity in the network device.

The second information is associated with second data. For example, the second information may include the second data and control information associated with the second data. The second data is data to be forwarded by the network device, or in other words, the second data is data that needs to be forwarded by the network device. For example, the target node for the second data is a node other than the network device, such as a network element node in the core network.

In some embodiments, the first information and the second information may be carried in different information fields in the same information. For example, both the first information and the second information may be carried in twenty-fourth information, where the twenty-fourth information includes a first information field and a second information field. The first information may be carried in the first information field in the twenty-fourth information, and the second information may be carried in the second information field in the twenty-fourth information. In an example where the twenty-fourth information is one type of RRC message, the first information and/or the second information may be carried in different information fields of the same type of RRC message. In this way, the first information and the second information can be transmitted through the same process, achieving simple implementation. However, in this case, there is a certain correlation between the decoding of the first information and the decoding of the second information. Therefore, during the decoding of the twenty-fourth information, the correlation between the decoding of the first information and the decoding of the second information needs to be considered.

In one transmission of the twenty-fourth information, the twenty-fourth information may include the first information and/or the second information. That is, in one transmission of the twenty-fourth information, the twenty-fourth information carries both the first information and the second information, or the twenty-fourth information carries only one of the first information and the second information.

In some embodiments, the first information and the second information are independent of each other. That is, the information associated with the first data and the information associated with the second data may be carried in different information. The first information and the second information may be associated with different transmission resources, and/or the first information and the second information may be associated with different message types. As such, the decoding of the first information can be further separated from the decoding of the second information. In this way, the decoding of the first information is completely independent of the decoding of the second information, which helps to avoid the impact of the correlation between the decoding of the first information and the decoding of the second information.

The different transmission resources may include one or more of different logical channels, different signaling radio bearers (SRBs), or different radio bearers (RBs). Since the first information and the second information are carried in different resources, the decoding of the first information and the decoding of the second information are relatively independent.

For example, the first information and the second information are associated with different SRBs and different logical channels. As an example, the first information may be associated with logical channel *W* (a logical channel identified as *W*) and SRB *A*, or in other words, logical channel *W* and SRB *A* may be used to carry the first information; and the second information may be associated with logical channel *Z* and SRB *B*, or in other words, logical channel *Z* and SRB *B* may be used to carry the second information. In this case, the resources used for the first information and the second information are completely independent, so the processing of the first information and the processing of the second information are independent of each other.

For another example, the first information and the second information are associated with different RBs, such as different types of RBs. As an example, the first information may be associated with an SRB, and the second information may be associated with a data radio bearer (DRB). In this case, the processing of the first information and the processing of the second information are also independent of each other.

For yet another example, the first information and the second information may be associated with different message types. It can be noted that in this case, the first information and the second information may be associated with different transmission resources or may be associated with the same transmission resource. In an example where the first information and the second information are associated with the same transmission resource SRB A, the message type associated with the first information may be RRC message 1 carried by the SRB A, and the message type associated with the second information may be RRC message 2 carried by the SRB A. Since the sending of RRC message 1 and the sending of RRC message 2 are independent of each other, the processing of RRC message 1 and the processing of RRC message 2 are also independent of each other. However, before the RRC layer processes RRC message 1 and RRC message 2, or rather, after the RRC layer receives the data, the RRC layer first needs to determine the message type of the currently-received RRC message according to the RRC message type header, so that the RRC layer can further determine whether the received RRC message is information associated with the first data or information associated with the second data according to whether the type of the RRC message is RRC message 1 or RRC message 2.

In some embodiments, one or more of a transmission resource associated with the first information, a transmission resource associated with the second information, a message type associated with the first information, or a message type associated with the second information may be configured in multiple modes. For example, the configuration mode may include one or more of a protocol predefined mode, a pre-configuration mode, or a dynamic configuration mode. For another example, the configuration mode for the transmission resource associated with the first information, the configuration mode for the transmission resource associated with the second information, the configuration mode for the message type associated with the first information, and the configuration mode for the message type associated with the second information may be the same or different.

As an example, a logical channel and an SRB associated with the first information may be configured through the protocol predefined mode or the pre-configuration mode, and a logical channel and an SRB associated with the second information may be configured through the protocol predefined mode or the pre-configuration mode. As another example, the first information is carried in an SRB, and the second information is carried in a DRB. In this case, the SRB associated with the first information may be configured through the protocol predefined or the pre-configuration mode, and the DRB associated with the second information may be configured through the dynamic configuration mode, such as dynamic configuration through the network device.

In some embodiments, the first information and the second information may be distinguished by different identification parameters. For example, different values of one bit are used to distinguish the first information and the second information.

To save resources occupied by identification parameters, the first information and the second information may be associated with different transmission resources and/or different message types. In this way, the network device can determine whether the received information is the first information or the second information according to a resource location of the received information. That is, the network device can determine whether the received information is the first information or the second information through a resource carrying the information. Alternatively, the network device can determine whether the received information is the first information or the second information according to a message type of the received message.

The information associated with the first data, i.e., the first information, and the information associated with the second data, i.e., the second information, are introduced separately below.

### First Information

As mentioned above, the first information is information associated with the first data that needs to be processed by the network device.

Since the network device is composed of multiple functional entities, the multiple functional entities included in the network device can be divided into different functional units, and each functional unit may include one or more functional entities. For example, the multiple functional entities of the network device can be divided into two functional units: a CU and a DU. For another example, the multiple functional entities of the network device can be divided into two functional units: an RRC protocol layer and a non-RRC protocol layer. For yet another example, the functional units of the network device can be divided into two functional entities: a layer 3 (L3) functional entity and a non-L3 functional entity. It can be noted that the division manners for the functional units of the network device are not limited in this regard, and there may further exist a division manner for functional units of a future network device.

Therefore, the first information may include third information. The third information may indicate a functional unit for processing the first data. For example, the third information may indicate any one of: whether the first data is to be processed by a CU, whether the first data is to be processed by a DU, whether the first data is to be processed by an RRC protocol layer, whether the first data is to be processed by a non-RRC protocol layer, whether the first data is to be processed by a non-L3 protocol layer, or whether the first data is to be processed by an L3 protocol layer. As an example, the third information may indicate the functional unit for processing the first data through identifier information of the functional unit. For instance, the third information may indicate that the first data is to be processed by the CU, the first data is to be processed by the RRC protocol layer, and the first data is to be processed by the L3 through 00, 01, and 10, respectively. As another example, the third information may indicate the functional unit for processing the first data through different values of a fixed bit. For instance, the third information is of 1 bit, when the value of the bit is 1, the third information indicates that the functional unit for processing the first data is the CU, and when the value of the bit is 0, the third information indicates that the functional unit for processing the first data is the DU. Alternatively, when the value of the bit is 1, the third information indicates that the functional unit for processing the first data is the RRC protocol layer, and when the value of the bit is 0, the third information indicates that the functional unit for processing the first data is the non-RRC protocol layer. Alternatively, when the value of the bit is 1, the third information indicates that the functional unit for processing the first data is the L3 protocol layer, and when the value of the bit is 0, the third information indicates that the functional unit for processing the first data is the non-L3 protocol layer. It can be noted that the meanings represented by the above bit values are merely exemplary descriptions, and the disclosure is not limited in this regard. As another example, the third information may indicate the functional unit for processing the first data through different message types, such as different RRC messages. For example, when the third information is RRC message 1, the third information indicates that the functional unit for processing the first data is the CU, and when the third information is RRC message 2, the third information indicates that the functional unit for processing the first data is the DU.

In an example where the multiple functional entities of the network device is divided into two functional units, i.e., the CU and the DU, if the third information indicates that the first data needs to be processed by the CU functional unit, the first data is processed within the CU functional unit, and if the third information indicates that the first data does not need to be processed by the CU functional unit, the first data is forwarded by the CU functional unit to the DU, and then is processed by the DU functional unit. In an example where the multiple functional entities of the network device is divided into two functional units, i.e., the RRC protocol layer and the non-RRC protocol layer, if the third information indicates that the first data needs to be processed by the RRC protocol layer, the first data is processed in the RRC protocol layer, and if the third information indicates that the first data does not need to be processed by the RRC protocol layer, the first data is forwarded by the RRC protocol layer to the DU or the PDCP protocol layer, and then is processed by the DU or the PDCP protocol layer functional unit. In an example where the multiple functional entities of the network device is divided into two functional entities, i.e., the L3 functional entity and the non-L3 functional entity, if the third information indicates that the first data needs to be processed by the L3 functional entity, the first data is processed in the L3 functional entity, and if the third information indicates that the first data does not need to be processed by the L3 functional entity, the first data is forwarded by the L3 functional entity to the DU or the PDCP protocol layer, and then is processed by the DU or the PDCP protocol layer functional unit.

In this way, upon receiving the first information, the network device only needs to decode information indicating the functional unit for processing the first data, such as the third information of 1 bit mentioned above. Furthermore, the network device can forward the information associated with the first data to the corresponding functional unit based on the decoding result, which helps to reduce the complexity of the control unit, e.g., the CU, of the network device.

In some embodiments, the third information may contain indication information of a functional entity for processing the first data. For example, the functional entity for processing the first data may be indicated through a functional entity identifier. For instance, different values of 3 bits are used to respectively indicate the aforementioned functional entities, including the SDAP, the RRC, the PDCP, the BAP, the RLC, the MAC, the PHY, and the AI/ML.

In some cases, such as a case where multiple functional entities can directly communicate with each other, upon receiving the first information, the control unit of the network device may directly send the information associated with the first data to the functional entity for processing the first data according to the third information. In other cases, such as a case where multiple functional entities cannot communicate directly with each other, upon receiving the first information, the control unit of the network device may determine the functional unit for processing the first data based on the functional entity for processing the first data, and then send the information associated with the first data to the functional unit for processing the first data. In this case, a correspondence between multiple functional entities and functional units may be predefined or preconfigured by a protocol. For instance, a correspondence between the functional entity identifiers and the functional units may be predefined or preconfigured by a protocol.

In some embodiments, the third information may indicate a functional entity for processing the first data and a functional unit for processing the first data. For example, the third information may include an identifier of the functional unit for processing the first data and an identifier of the functional entity for processing the first data within the functional unit. The identifier of the functional entity for processing the first data herein may be a global identifier in the network device or an independent identifier within each functional unit. In an example where the functional unit for processing the first data is the CU, the third information may indicate that the functional entity for processing the first data is the RRC protocol layer through 01, and indicate that the functional entity for processing the first data is the PDCP protocol layer through 10. In an example where the functional unit for processing the first data is the DU, the third information may indicate that the functional entity for processing the first data is the RLC protocol layer through 01, and indicate that the functional entity for processing the first data is the MAC protocol layer through 10.

It can be seen that indicating the functional entity for processing the first data through the third information helps to improve the flexibility of data transmission and the scalability of the system. For example, when a new functional entity is added to the network device, an identifier of the new functional entity can be directly added.

Before forwarding the information associated with the first data, the control unit in the network device may decode part of the information associated with the first data, or may decode all the information associated with the first data. For example, the network device may decode all the information associated with the first data, so as to send the first data or both the decoding result and the first data the functional entity for using the first data, achieving simple implementation. For another example, the network device may only decode the information indicating the functional entity for processing the first data and/or the functional unit for processing the first data, so as to forward the information associated with the first data to a corresponding functional entity and/or a corresponding functional unit for processing based on the information, which in turn helps to reduce the complexity of the control unit, e.g., the CU, of the network device, and simplify the data transmission. In this case, the functional entity for processing the first data may further decode the information associated with the first data.

If the third information indicates any one of the first data being to be processed by the CU, the first data being to be processed by the RRC protocol layer, or the first data being to be processed by the L3 protocol layer, the first information may further include one or more of: fourth information indicating a functional entity for processing and/or using the first data, fifth information indicating a message type associated with the first data, sixth information indicating a data type corresponding to the first data, or indicating a data type and a data format corresponding to the first data, seventh information being the first data, eighth information indicating a quantity of the first data sharing first control information, or ninth information indicating whether transmission of the first data ends. The fourth information to ninth information are described separately below.

In some embodiments, the first information may include the fourth information. The fourth information may indicate a functional entity for processing and/or using the first data, such as the CU, the DU, the SDAP, the RRC, the PDCP, the BAP, the RLC, the MAC, the PHY, the AI/ML, and the like.

Based on the method mentioned above, the third information can indicate any one of the first data being to be processed by the CU, the first data being to be processed by the RRC protocol layer, or the first data being to be processed by the L3 protocol layer by indicating the functional entity for processing the first data and/or the functional unit for processing the first data. If a functional unit for processing the first data indicated by the third information includes multiple functional entities, the fourth information may indicate the functional entity for processing the first data. The functional entity for processing the first data may refer to, e.g., a functional entity for decoding the information associated with the first data. For example, if the third information indicates that the functional unit for processing the first data is the CU, the fourth information may indicate whether the functional entity for processing the first data is the RRC protocol layer, the SDAP protocol layer, or the PDCP protocol layer.

In some cases, the functional entity for processing the first data and the functional entity for using the first data may not be the same. Therefore, the fourth information may also indicate the functional entity for using the first data. For example, if the third information indicates that the first data is to be processed by the CU, and the fourth information indicates that the first data needs to be processed by the RRC protocol layer, the fourth information may also indicate that the functional entity for using the first data is the PDCP protocol layer. In this case, the RRC protocol layer may decode the information associated with the first data and send the decoded first data to the PDCP protocol layer.

For the same functional entity, there may be multiple types of messages. Since different types of messages include parameters of different types and/or formats, the decoding manners corresponding to different types of messages may be different, for example, as mentioned above, different RRC message types correspond to different decoding rules. Based on this, the first information may include information for indicating a message type associated with the first data, that is, fifth information. In an example where the first data is to be processed by the RRC protocol layer, if the message types of RRC protocol layers include 9 uplink message types, the fifth information may indicate which of the above nine message types the message type associated with the first data is. In this way, the network device can determine a decoding rule for the information associated with the first data according to the message type associated with the first data. In other words, the network device can determine the types and/or formats of parameters contained in the information associated with the first data according to the message type associated with the first data, so as to determine the decoding rule for the information associated with the first data according to the types and/or formats of parameters. The correspondence between each message type and the types and/or formats of parameters, or in other words, the types and/or formats of parameters contained in each type of message may be determined based on predefined information.

In some embodiments, the first information may include information indicating a length of the first data and/or a length of the information associated with the first data, that is, the sixth information. The sixth information may be used for determining a data boundary of the first data and/or a data boundary of the information associated with the first data. The network device can process, e.g., decode, the information associated with the first data based on the data boundary, and can also forward the first data and/or the information associated with the first data based on the data boundary.

Upon receiving the first information, the network device may need to forward the first data or the information associated with the first data between different functional entities included in the network device. For example, as mentioned above, the functional entity for processing the information associated with the first data needs to forward the first data to the functional entity for using the first data. For another example, upon receiving the first information, the RRC protocol layer may need to forward the first data or the information associated with the first data to the functional unit for processing the first data or the functional entity for processing the first data. A current functional entity, e.g., the RRC protocol layer, needs to determine the number of bits occupied by the first data or the number of bits occupied by the information associated with the first data, so as to correctly forward the first data or the information associated with the first data, which helps to avoid data decoding failures caused by incorrectly truncating the first data or the information associated with the first data. As an example, if the current functional entity is the CU and the first data needs to be forwarded to the DU, the CU needs to determine an information length of the first data, so as to forward the correct and complete first data to the DU.

The network device can determine the data boundary of the first data and/or the data boundary of the information associated with the first data based on the sixth information, and thus correctly forwards the first data or the information associated with the first data, which helps to improve the encapsulation of information. In addition, the current functional entity may not decode the information associated with the first data, but may directly forward the information associated with the first data to the functional entity for processing the first data, which reduces the functional complexity of a functional entity for forwarding the information associated with the first data.

In some embodiments, the sixth information may indicate a data type associated with the first data. Since there is a certain correlation between the data type and the data format, the network device can determine the data format of the first data based on the data type associated with the first data, so as to determine the number of bits occupied by the first data. In this case, the correlation between the data type and the data format, as well as the number of bits occupied by the data format may be determined based on protocol-predefined information or preconfigured information. Table 1 illustrates an example of correlation between the data types and the data formats.

**Table 1**

| | |
|---|---|
| data type identifier 1 | data format 1 |
| data type identifier 2 | data format 2 |
| ...... | ...... |
| data type identifier n1 | data format n1 |

Referring to Table 1, data type identifiers 1 to n1 are in one-to-one correspondence with data formats 1 to n1, where n1 is a positive integer greater than or equal to 1.

If the network device knows the correlation between the data types and the data formats illustrated in Table 1, the functional entity in the network device can determine a data format of the first data according to the data type associated with the first data indicated by the sixth information and the correlation in Table 1, so as to demodulate the first data. For example, a protocol-predefined reference signal received power (RSRP) parameter corresponds to data type identifier 1, and data format 1 associated with data type identifier 1 indicates that data of this type occupies 8 bits, if the sixth information indicates that the first data is RSRP-type data, the network device can determine that the first data occupies 8 bits, and thus truncate the subsequent 8 bits for decoding to obtain a corresponding RSRP value.

The same data type may be associated with more than one data format. For example, the same data type may be associated with two data formats, and the two data formats correspond to different precision requirements of the data type. Therefore, the sixth information may indicate a data type associated with the first data and a data format associated with the first data. When one data type is associated with more than one data format, the network device can determine format information of the first data based on the sixth information. It can be noted that the correlation between the data type and the data format, as well as the number of bits occupied by the data format may be determined based on the protocol-predefined information or the preconfigured information. Table 2 illustrates another example of correlation between the data types and the data formats.

**Table 2**

| | |
|---|---|
| data type identifier 1 | data format 11 |
| | data format 12 |
| data type identifier 2 | data format 21 |
| | data format 22 |
| | data format 23 |

For example, the protocol-predefined RSRP parameter corresponds to data type identifier 1, data format 11 associated with data type identifier 1 indicates that data of this type occupies 8 bits, and data format 12 associated with data type identifier 1 indicates that data of this type occupies 16 bits, if the sixth information indicates that the first data is RSRP-type data with a data format of data format 12, the network device can determine that the first data occupies 16 bits, and thus truncate the subsequent 16 bits for decoding to obtain a corresponding RSRP value.

It can be noted that the correlation between the data type and the data format, such as the correlation illustrated in Table 1 and Table 2, can be defined in the protocol explicitly or implicitly, and the disclosure does not limit the manner in which the protocol predefines the correlation.

The length information of the first data or the length information of the data associated with the first data can be statically indicated based on the data type associated with the first data and/or the data format associated with the first data. In some embodiments, the sixth information may dynamically indicate the length information of the first data or the length information of the information associated with the first data. For example, the sixth information may be the length information of the first data, that is, the number of bits occupied by the first data. A data receiver, such as the network device, can process the first data based on the number of bits occupied by the first data. For another example, the sixth information may be the length information of the information associated with the first data. A data forwarder, such as the RRC protocol layer, can forward the information associated with the first data to the functional entity for processing the first data based on the length information of the information associated with the first data.

In some embodiments, the first information may include the seventh information. The seventh information is the first data. A target node or a target functional entity for the transmission of the first data can decode the first data based on the seventh information. For example, if the target functional entity for the transmission of the first data is the CU, the CU decodes the first data, and if the target functional entity for the transmission of the first data is the RRC protocol layer, the RRC protocol layer decodes the first data.

The first information may include one or more types of first data. Each type of first data may need to be processed separately. In this case, upon finishing processing one type of first data, the network device may need to determine whether to process the next type of first data. Therefore, the first information may include the ninth information. The ninth information may indicate whether the transmission of the first data ends. Based on the ninth information, it can be determined whether all the first data included in the first information is processed. For example, the ninth information is in one-to-one correspondence with the first data. Table 3 is an example of the first information, where the first information illustrated in Table 3 includes the ninth information.

**Table 3**

| seventh information | ninth information | seventh information | ninth information | seventh information | ninth information |
|---|---|---|---|---|---|
| first type of first data | No | second type of first data | No | third type of first data | Yes |

Referring to Table 3, the first information includes three types of first data. Each type of first data corresponds to one ninth information. When the ninth information indicates that the transmission of the first data does not end, i.e., "No" in Table 3, the first data included in the first information is not processed completely. When the ninth information indicates that the transmission of the first data ends, i.e., "Yes" in Table 3, the first data included in the first information is processed completely. As illustrated in Table 3, the ninth information corresponding to the first type of first data and the ninth information corresponding to the second type of first data indicate "No", that is, other than the first type of first data and the second type of first data, the first information further includes another first data, which means that the first data in the first information is not processed completely. The ninth information corresponding to the third type of first data indicates "Yes", which means that all the first data included in the first information is processed completely after the processing of the third type of first data, or in other words, transmission of the information associated with the first data ends.

If the first information includes multiple types of first data, the multiple types of first data may share the same control information (which may be referred to as first control information) or may use different control information. The control information herein may be information used for the processing or the decoding of the first data, such as one or more of the fourth information, the fifth information, or the sixth information mentioned above. That is, the first control information associated with the first data is in one-to-one correspondence with the first data, or is in one-to-many correspondence with the first data.

Table 4 is another example of the first information, where the first control information associated with the first data in the first information illustrated in Table 4 is in one-to-one correspondence with the first data.

**Table 4**

| first control information 1 | seventh information | ninth information | first control information 2 | seventh information | ninth information | first control information 3 | seventh information | ninth information |
|---|---|---|---|---|---|---|---|---|
| corresponding value | first type of first data | No | corresponding value | second type of first data | No | corresponding value | third type of first data | Yes |

Referring to Table 4, the first type of first data is associated with first control information 1, the second type of first data is associated with first control information 2, and the third type of first data is associated with first control information 3. In this case, before processing each first data (i.e., the seventh information), it is necessary to first confirm the first control information associated with the first data. For example, before processing the first type of first data, it is necessary to first confirm first control information 1 associated with the first type of first data, and before processing the second type of first data, it is necessary to first confirm first control information 2 associated with the second type of first data. It can be seen that the first control information associated with the first data is in one-to-one correspondence with the first data, which helps to reduce the decoding complexity of the first data and improve the flexibility of data transmission.

Table 5 is another example of the first information, where the first control information associated with the first data in the first information illustrated in Table 5 is in one-to-many correspondence with the first data.

**Table 5**

| first control information 1 | seventh information | ninth information | seventh information | ninth information | seventh information | ninth information |
|---|---|---|---|---|---|---|
| corresponding value | first type of first data | No | second type of first data | No | third type of first data | Yes |

Referring to Table 5, the first type of first data, the second type of first data, and the third type of first data are all associated with first control information 1. That is, the first type of first data, the second type of first data, and the third type of first data share first control information 1. It can be seen that the first control information associated with the first data is in one-to-many correspondence with the first data, which helps to save transmission resources.

If the first control information associated with the first data is in one-to-many correspondence with the first data, a correlation between the first data and the first control information, that is, which first data is associated with which group of first control information, needs to be determined during data processing.

In some embodiments, the multiple types of first data included in the first information may all be associated with the same group of first control information. For example, the absence of additional indication in the first information means that the multiple types of first data included in the first information may all be associated with the same group of first control information, which helps to save transmission resources. As an example, the fact that multiple types of first data but only one group of first control information are included in the first information means that the multiple types of first data included in the first information are all associated with the same group of first control information.

In some embodiments, the multiple types of first data included in the first information may be associated with different first control information, which helps to improve the flexibility of data transmission. For example, the first information may include information indicating whether the transmission of the first data sharing the same group of first control information ends. For another example, the first information may include the eighth information indicating a quantity of the first data sharing the first control information. In this case, the ninth information may be omitted from the first information to save resources.

Table 6 is another example of the first information, where the first information illustrated in Table 6 includes the eighth information.

**Table 6**

| first control information 1 | eighth information | seventh information | seventh information | seventh information |
|---|---|---|---|---|
| corresponding value | 3 | first type of first data | second type of first data | third type of first data |

Referring to Table 6, the eighth information associated with first control information 1 indicates 3, that is, a quantity of the first data sharing first control information 1 is 3, meaning that the first type of first data, the second type of first data, and the third type of first data share first control information 1.

The aforementioned first control information may include one or more of the fourth information, the fifth information, or the sixth information.

If the third information indicates any one of the first data being not to be processed by the CU, the first data being to be processed by the DU, the first data being not to be processed by the RRC protocol layer, or the first data being not to be processed by the L3 protocol layer, the first information may further include one or more of: tenth information being any one of information associated with the first data not to be processed by the CU, information associated with the first data to be processed by the DU, information associated with the first data not to be processed by the RRC protocol layer, or information associated with the first data not to be processed by the L3 protocol layer; or eleventh information indicating an information length of the tenth information. The tenth information and eleventh information are described separately below.

If the first data is not to be processed by the CU, the CU needs to forward the information associated with the first data, such as information associated with the first data not to be processed by the CU. If the first data is not to be processed by the RRC protocol layer, the RRC protocol layer needs to forward the information associated with the first data, such as information associated with the first data not to be processed by the RRC protocol layer. If the first data is not to be processed by the L3 protocol layer, the L3 needs to forward the information associated with the first data, such as information associated with the first data not to be processed by the L3. Therefore, the first information may include the tenth information, and the information that needs to be forwarded by the CU, the RRC protocol layer, or the L3 can be determined based on the tenth information.

As mentioned above, when a functional entity needs to forward the information associated with the first data, the functional entity can forward the information based on the boundary of the information associated with the first data. This helps to avoid data decoding failures caused by incorrectly truncating the first data or the information associated with the first data, and also helps to avoid the additional complexity caused by the decoding, performed by the current functional entity, of information associated with the first data used by other functional entities. Therefore, the first information may further include the eleventh information indicating the information length of the tenth information. A data boundary of the tenth information can be determined based on the eleventh information.

In some embodiments, the tenth information may include the first data and/or the control information associated with the first data. The control information associated with the first data is forwarded together with the first data to the corresponding functional entity, which helps to avoid the complexity of additional decoding of the control information by the CU, the RRC protocol layer, or the L3.

For example, the tenth information may include one or more of: twelfth information indicating a functional entity for processing and/or using the first data, thirteenth information indicating a message type associated with the first data, fourteenth information indicating a data type corresponding to the first data, or indicating a data type and a data format corresponding to the first data, fifteenth information being the first data, sixteenth information indicating a quantity of the first data sharing second control information, or seventeenth information indicating whether transmission of the first data ends.

When a data receiver of the tenth information, such as the DU, includes multiple functional entities, the functional entity for processing the first data in the data receiver can be determined based on the twelfth information, such as a functional entity for decoding the control information associated with the first data included in the tenth information, so that the tenth information is forwarded to the functional entity for processing the first data. The functional entity for using the first data can also be determined based on the twelfth information, so that the first data, or the first data and the decoding result is sent to the functional entity for using the first data. As an example, if the first data is not to be processed by the CU, the CU may first forward the tenth information to the DU or to a functional entity for processing the first data in the DU indicated by the twelfth information. Then, the DU performs data decoding and sends the decoded data to a functional entity for using the first data in the DU indicated by the twelfth information, or a functional entity indicated by the twelfth information directly decodes and uses the tenth information. The twelfth information may indicate one or more of functional entities including the DU, the RLC, the BAP, the MAC, the PHY, or the AI/ML.

As mentioned above, different message types include parameters of different types and/or formats, and parameters of different types or formats correspond to different decoding rules. Therefore, the first information may include the thirteenth information, and the types and/or formats of parameters included in the tenth information can be determined based on the thirteenth information, so as to determine a decoding rule for the tenth information. The correspondence between each message type and the types and/or formats of parameters, or in other words, the types and/or formats of parameters included in each type of message may be determined based on predefined information.

If the functional entity for processing the first data is different from the functional entity for using the first data, the functional entity for processing the first data can send the processed first data to the functional entity for using the first data. In this case, the functional entity for processing the first data sends the decoded first data to the functional entity for using the first data. For example, the DU decodes an MAC layer configuration and then sends the decoded result to the MAC protocol layer in the DU for use. Therefore, the tenth information may include the fourteenth information. The fourteenth information indicates the data type corresponding to the first data, or indicates the data type and the data format corresponding to the first data. In this way, a regional central functional entity, such as the DU, decodes one or more of the thirteenth information, the fourteenth information, the fifteenth information, the sixteenth information, or the seventeenth information and sends the decoded information to the functional entity for using the first data.

If the functional entity for processing the first data is the same as the functional entity for using the first data, upon receiving the information associated with the first data forwarded by the CU, the DU first determines a target functional entity associated with the first data according to the twelfth information, then the DU forwards the information associated with the first data to the target functional entity associated with the first data. Finally, the target functional entity associated with the first data decodes and uses the first data. In this way, the regional central functional entity, such as the DU, does not decode the first data of other functional entities, but is responsible for forwarding the first data. Finally, the target functional entity associated with the first data decodes one or more of the thirteenth information, the fourteenth information, the fifteenth information, the sixteenth information, or the seventeenth information and uses the decoded information.

There is a certain correlation between the data type and the data format, for example, one data type is associated with one data format, or one data type is associated with multiple data formats. If one data type is associated with one data format (as illustrated in Table 1), the information length of the first data can be determined based on a data type corresponding to the first data indicated by the fourteenth information and the correlation. If one data type is associated with multiple data formats (as illustrated in Table 2), the information length of the first data can be determined based on a data type and a data format corresponding to the first data indicated by the fourteenth information.

It can be noted that the correlation between the data type and the data format, as well as the number of bits occupied by the data format may be determined based on the protocol-predefined information or the preconfigured information.

In some embodiments, the fourteenth information may be the length information of the first data, that is, the number of bits occupied by the first data.

In some embodiments, the tenth information may include the fifteenth information, where the fifteenth information is the first data.

The tenth information may include one or more types of first data. Each type of first data may need to be processed separately. In this case, upon finishing processing one type of first data, the network device may need to determine whether to process the next type of first data. Therefore, the tenth information may include the seventeenth information. The seventeenth information may indicate whether the transmission of the first data ends. Based on the seventeenth information, it can be determined whether all the first data included in the first information is processed. For example, the seventeenth information is in one-to-one correspondence with the first data. Table 7 is an example of the tenth information, where the tenth information illustrated in Table 7 includes the seventeenth information.

**Table 7**

| fifteenth information | seventeenth information | fifteenth information | seventeenth information | fifteenth information | seventeenth information |
|---|---|---|---|---|---|
| first type of first data | No | second type of first data | No | third type of first data | Yes |

Referring to Table 7, the tenth information includes three types of first data. Each type of first data corresponds to one seventeenth information. When the seventeenth information indicates that the transmission of the first data does not end, i.e., "No" in Table 7, the first data included in the tenth information is not processed completely. When the seventeenth information indicates that the transmission of the first data ends, i.e., "Yes" in Table 7, the first data included in the tenth information is processed completely. As illustrated in Table 7, the seventeenth information corresponding to the third type of first data indicates "Yes", which means that all the first data included in the tenth information is processed completely after the processing of the third type of first data, or in other words, transmission of the information associated with the first data ends.

If the tenth information includes multiple types of first data, the multiple types of first data may share the same control information (which may be referred to as second control information) or may use different control information. That is, the second control information associated with the first data is in one-to-one correspondence with the first data, or is in one-to-many correspondence with the first data. The control information mentioned herein may be information used for the processing or the decoding of the first data, such as one or more of the twelfth information, the thirteenth information, or the fourteenth information mentioned above. The one-to-one correspondence between the second control information associated with the first data and the first data helps to improve the flexibility of data transmission, and the one-to-many correspondence between the second control information associated with the first data and the first data helps to save transmission resources.

Table 8 is another example of the tenth information, where the second control information associated with the first data in the tenth information illustrated in Table 8 is in one-to-one correspondence with the first data.

**Table 8**

| second control information 1 | fifteenth information | seventeenth information | second control information 2 | fifteenth information | seventeenth information | second control information 3 | fifteenth information | seventeenth information |
|---|---|---|---|---|---|---|---|---|
| corresponding value | first type of first data | No | corresponding value | second type of first data | No | corresponding value | third type of first data | Yes |

Referring to Table 8, the first type of first data is associated with second control information 1, the second type of first data is associated with second control information 2, and the third type of first data is associated with second control information 3. In this case, before processing each first data (i.e., the fifteenth information), it is necessary to first confirm the second control information associated with the first data.

Table 9 is another example of the tenth information, where the second control information associated with the first data in the tenth information illustrated in Table 9 is in one-to-many correspondence with the first data.

**Table 9**

| second control information 1 | fifteenth information | seventeenth information | fifteenth information | seventeenth information | fifteenth information | seventeenth information |
|---|---|---|---|---|---|---|
| corresponding value | first type of first data | No | second type of first data | No | third type of first data | Yes |

Referring to Table 9, the first type of first data, the second type of first data, and the third type of first data are all associated with second control information 1. That is, the first type of first data, the second type of first data, and the third type of first data share second control information 1. It can be seen that the second control information associated with the first data is in one-to-many correspondence with the first data, which helps to save transmission resources.

If the second control information associated with the first data is in one-to-many correspondence with the first data, a correlation between the first data and the second control information, that is, which first data is associated with which group of second control information, needs to be determined during data processing.

In some embodiments, the multiple types of first data included in the tenth information may all be associated with the same group of second control information. For example, the absence of additional indication in the tenth information means that the multiple types of first data included in the tenth information may all be associated with the same group of second control information, which helps to save transmission resources. As an example, the fact that multiple types of first data but only one group of second control information are included in the tenth information means that the multiple types of first data included in the tenth information are all associated with the same group of second control information.

In some embodiments, the multiple types of first data included in the tenth information may be associated with different second control information, which helps to improve the flexibility of data transmission.

For example, the tenth information may include information indicating whether the transmission of the first data sharing the same group of second control information ends. As an example, each type of first data is associated with one indication information. The indication information indicates whether the transmission of the first data sharing the same group of second control information ends. Alternatively, only the last group of first data sharing the same group of second control information is associated with one indication information. The indication information indicates that the transmission of the first data sharing the same group of second control information ends, which saves transmission resources.

For another example, the tenth information may include the sixteenth information indicating a quantity of the first data sharing the second control information. The second control information may include one or more of the twelfth information, the thirteenth information, or the fourteenth information. In this case, the seventeenth information may be omitted from the tenth information to save resources.

Table 10 is another example of the tenth information, where the tenth information illustrated in Table 10 includes the sixteenth information.

**Table 10**

| second control information 1 | sixteenth information | fifteenth information | fifteenth information |
|---|---|---|---|
| corresponding value | 2 | first type of first data | second type of first data |

Referring to Table 10, the sixteenth information associated with second control information 1 indicates 2, that is, a quantity of the first data sharing second control information 1 is 2, meaning that the first type of first data and the second type of first data share second control information 1.

Through the above analysis, it can be seen that the method for data transmission provided by embodiments of the disclosure helps to designate the centralized data processing in the network device, such as the centralized data processing of the CU, to multiple functional entities. This helps to save the resources of the CU and avoid excessive complexity in the development of the CU functions, which in turn contributes to the sound operation of the system.

### Second Information

The second information may be associated with the second data. The second data is data to be forwarded by the network device. The second information may include one or more of: eighteenth information indicating information associated with a transmission path of the second data, nineteenth information indicating quality of service (QoS) information associated with the second data, twentieth information indicating a length of the second data, twenty-first information being the second data, twenty-second information indicating a quantity of the second data sharing third control information, or twenty-third information indicating whether transmission of the second data ends.

The second data is data that needs to be forwarded by the network device but does not need to be processed by the access network device. Therefore, to enable the network device to successfully complete a data forwarding task, the second information may include the eighteenth information, i.e., information associated with the transmission path of the second data. In some embodiments, the eighteenth information may include the transmission path of the second data. For example, the transmission path of the second data is from the terminal device to the network device, then from the network device to the AMF, and further from the AMF to network element *A* of the core network. In some embodiments, the eighteenth information may include an intermediate node (also referred to as a forwarding node) for transmission of the second data and/or a target node (also referred to as a transmission termination node) for transmission of the second data. For example, the forwarding node of the second data can transmit the data to a final destination at least based on the target node. In this way, the transmission path of the second data can be selected based on the intermediate node and/or the target node, and the second data is not bound to a fixed path, which helps to improve the flexibility of the data transmission path and improve the robustness of information transmission.

In some embodiments, the eighteenth information may indicate the target node and/or the intermediate node through one or more of: node category information, node identification information, or node address information.

A node identifier is used to assist information transmission routing. Each node identifier may refer to a functional node. To achieve flexible data transmission, a communication system may uniformly number multiple functional nodes. Each number value corresponds to one node identifier. For example, the functional nodes include one or more of: a location management function (LMF) network element, an NSSF network element, an AUSF network element, a UDM network element, an AMF network element, an SMF network element, a PCF network element, a UPF network element, a sensing function (SF) network element, an NWDAF network element, an artificial intelligence (AI) function management entity, an operation administration and maintenance (OAM) functional entity, or an over the top (OTT) server.

In some embodiments, the eighteenth information may indicate the target node and/or the intermediate node through the node identification information. For example, the eighteenth information may be an overall information field, that is, the eighteenth information is not divided to sub-information fields. For example, '1111' represents an AMF functional node, '1110' represents an LMF functional node, '1101' represents an NWDAF functional node, '1100' represents an OAM functional node, '1011' represents an AI function management entity node, '1010' represents an OTT server node, and so on.

In some embodiments, the eighteenth information may indicate the target node and/or the intermediate node through the node category information and the node identification information. For example, the eighteenth information may include at least two information fields. For example, the eighteenth information may include information field M and information field *N*, where information field *M* represents a node category (e.g., the category includes a core network node category, a network management node category, and a server node category), and information field N represents a specific functional node in the same node category (e.g., an LMF node in the core network node category, a data collection node in the network management node category, and server A in the server node category).

The node address information can assist in information transmission. For example, the second information can be transmitted to the target node based on address information of the target node. A correlation between a node and corresponding node address information is predefined or preconfigured, and the node address information can be obtained through a protocol default manner or can be obtained from the core network device during the terminal device registration.

In some embodiments, the eighteenth information may directly indicate the address information of the target node and/or the intermediate node.

Based on the information associated with the transmission path of the second data, one or more transmission paths of the second data can be determined. If the determined result includes only one transmission path of the second data, the second data is transmitted based on the transmission path. If the determined result includes multiple transmission paths of the second data, the transmission path of the second data can be randomly selected, or the transmission path of the second data can be selected in combination with other information.

For example, the transmission path of the second data can be selected based on a congestion degree or an idle degree of the transmission path. For instance, an idle transmission path or a transmission path with a low congestion degree can be selected to transmit the second data, which improves the data transmission efficiency.

For another example, the transmission path of the second data can be determined at least based on the QoS information associated with the second data. For example, QoS requirements for data transmission associated with the second data assist the network device in determining which transmission path are more in line with data forwarding requirements, so as to filter out some data transmission paths that do not satisfy the data forwarding requirements.

Based on this, the second information may include the nineteenth information indicating the QoS information associated with the second data, such as QoS requirement information for the transmission of the second data. The QoS information associated with the second data may include one or more of: a data bit error rate, a data packet delay, a data packet loss rate, or a data priority level.

As an example, a first transmission path, a second transmission path, and a third transmission path can all be available for transmission of the second data. The first transmission path preferentially forwards data with priority level 1 and priority level 2, the second transmission path preferentially forwards data with priority level 3 and priority level 4, and the third transmission path forwards data with the other priority levels. During data forwarding, if the data priority level associated with the second data is priority level 3, the network device preferentially forwards the second data of this type through the second path.

As another example, the transmission path of the second data can be determined based on the QoS information associated with the second data and other information, such as the congestion degree of the transmission path. In an example where the first transmission path and the second transmission path are both available for the transmission of the second data, the first transmission path preferentially forwards data with priority level 1 and priority level 2, and the second transmission path preferentially forwards data with priority level 3 and priority level 4. If the priority level of the second data is priority level 2, the first transmission path is congested, and the second transmission path is idle, then the second transmission path can be used for the transmission of the second data.

The data priority level may be associated with the QoS requirement for data transmission. Therefore, in some embodiments, the nineteenth information may also directly indicate the priority level of the second data.

In some embodiments, the second information may include the twenty-first information, i.e., the second data.

In some embodiments, the network device may forward the second data, or may forward the information associated with the second data. For example, the network device may decode all the second information, and then forward decoded second data to a target node associated with the second data or an intermediate node for data forwarding. For another example, the network device may only decode part of the information in the second information, such as information associated with the transmission path of the second data (e.g., next node information), and then forward the information associated with the second data, such as other information in the second information, to a next node.

Therefore, the second information may include the twentieth information indicating the length of the second data and/or the length of the information associated with the second data. The network device can determine a boundary of the second data and/or a boundary of the information associated with the second data based on the twentieth information, and thus correctly forwards the second data or the information associated with the second data, which helps to improve the encapsulation of information.

The second information may include one or more types of second data. Each type of second data may need to be processed separately. In this case, upon finishing processing one type of second data, it may be necessary to determine whether to process the next type of second data. Therefore, the second information may include the twenty-third information. The twenty-third information indicates whether the transmission of the second data ends. Based on the twenty-third information, it can be determined whether all the second data included in the second information is processed. For example, the twenty-third information is in one-to-one correspondence with the second data. Table 11 is an example of the second information, where the second information illustrated in Table 11 includes the twenty-third information.

**Table 11**

| twenty-first information | twenty-third information | twenty-first information | twenty-third information | twenty-first information | twenty-third information |
|---|---|---|---|---|---|
| first type of second data | No | second type of second data | No | third type of second data | Yes |

Referring to Table 11, the second information includes three types of second data. Each type of second data corresponds to one twenty-third information. When the twenty-third information indicates that the transmission of the second data does not end, i.e., "No" in Table 11, the second data included in the second information is not processed completely. When the twenty-third information indicates that the transmission of the second data ends, i.e., "Yes" in Table 11, the second data included in the second information is processed completely.

If the second information includes multiple types of second data, the multiple types of second data may share the same control information (which may be referred to as third control information) or may use different control information. That is, the third control information associated with the second data is in one-to-one correspondence with the second data, or is in one-to-many correspondence with the second data. The third control information mentioned herein may be information used for the processing or the decoding of the second data, such as one or more of the eighteenth information, the nineteenth information, or the twentieth information mentioned above. The one-to-one correspondence between the third control information associated with the second data and the second data helps to improve the flexibility of data transmission, and the one-to-many correspondence between the third control information associated with the second data and the second data helps to save transmission resources.

Table 12 is another example of the second information, where third control information associated with the second data in the second information illustrated in Table 12 is in one-to-one correspondence with the second data.

**Table 12**

| third control information 1 | twenty-first information | twenty-third information | third control information 2 | twenty-first information | twenty-third information | third control information 3 | twenty-first information | twenty-third information |
|---|---|---|---|---|---|---|---|---|
| corresponding value | first type of second data | No | corresponding value | second type of second data | No | corresponding value | third type of second data | Yes |

Referring to Table 12, the first type of second data is associated with third control information 1, the second type of second data is associated with third control information 2, and the third type of second data is associated with third control information 3. In this case, before processing each second data (i.e., the twenty-first information), it is necessary to first confirm the third control data associated with the second data.

Table 13 is another example of the second information, where the third control information associated with the second data in the second information illustrated in Table 13 is in one-to-many correspondence with the second data.

**Table 13**

| third control information 1 | twenty-first information | twenty-third information | twenty-first information | twenty-third information | twenty-first information | twenty-third information |
|---|---|---|---|---|---|---|
| corresponding value | first type of second data | No | second type of second data | No | third type of second data | Yes |

Referring to Table 13, the first type of second data, the second type of second data, and the third type of second data are all associated with third control information 1. That is, the first type of second data, the second type of second data, and the third type of second data share third control information 1. It can be seen that the third control information associated with the second data is in one-to-many correspondence with the second data, which helps to save transmission resources.

If the third control information associated with the second data is in one-to-many correspondence with the second data, a correlation between the second data and the third control information, that is, which second data is associated with which group of third control information, needs to be determined during data processing.

In some embodiments, the multiple types of second data included in the second information may all be associated with the same group of third control information. For example, the absence of additional indication in the second information means that the multiple types of second data included in the second information may all be associated with the same group of third control information, which helps to save transmission resources. As an example, the fact that multiple types of second data but only one group of third control information are included in the second information means that the multiple types of second data included in the second information may all be associated with the same group of third control information.

In some embodiments, the multiple types of second data included in the second information may be associated with different third control information, which helps to improve the flexibility of the data transmission process.

For example, the second information may include information indicating whether the transmission of the second data sharing the same group of third control information ends. As an example, each type of second data is associated with one indication information. The indication information indicates whether the transmission of the second data sharing the same group of third control information ends. Alternatively, only the last type of second data sharing the same group of third control information is associated with one indication information. The indication information indicates that the transmission of the second data sharing the same group of third control information ends, which saves transmission resources.

For another example, the second information may include the twenty-second information indicating a quantity of the second data sharing the third control information. The third control information may include one or more of the eighteenth information, the nineteenth information, or the twentieth information. In this case, the twenty-third information may be omitted from the second information to save resources.

Table 14 is another example of the second information, where the second information illustrated in Table 14 includes the twenty-second information.

**Table 14**

| third control information 1 | twenty-second information | twenty-first information | twenty-first information |
|---|---|---|---|
| corresponding value | 2 | first type of second data | second type of second data |

Referring to Table 14, the twenty-second information associated with the third control information 1 indicates 2, that is, a quantity of the second data sharing third control information 1 is 2, meaning the first type of second data and the second type of second data share third control information 1.

As mentioned above, the first information and the second information may be carried in different information fields in the twenty-fourth information. In some embodiments, the twenty-fourth information may include one or more of: twenty-fifth information indicating whether the twenty-fourth information includes the first information or the first data, twenty-sixth information indicating whether the twenty-fourth information includes the second information or the second data, or twenty-seventh information indicating whether currently-processed data is the first information or the second information, or indicating whether the currently-processed data is the first data or the second data.

The twenty-fifth information can be regarded as on/off indication information indicating whether to process the first information or the information associated with the first data. If the twenty-fifth information indicates that the twenty-fourth information does not include the first information or the first data, the network device does not need to process the first information or the information associated with the first data. If the twenty-fifth information indicates that the twenty-fourth information includes the first information or the first data, the network device needs to process the first information or the information associated with the first data.

In some embodiments, the twenty-fifth information is defined explicitly. For example, the twenty-fifth information is explicitly included as a parameter in the definition of the twenty-fourth information, and the value of the twenty-fifth information determines whether there exists the first information or the information associated with the first data that needs to be processed.

In some embodiments, the first information or the information associated with the first data is an optional parameter in the definition of the twenty-fourth information, and an additional bit (e.g., a parameter annotation) in the definition of the optional parameter determines whether there exists the associated first information or information associated with the first data. In this case, the twenty-fifth information can be implicitly indicated by the additional bit, which saves parameter resources.

Correspondingly, the twenty-sixth information can be regarded as on/off indication information indicating whether to process the second information or the information associated with the second data. If the twenty-sixth information indicates that the twenty-fourth information does not include the second information or the second data, the network device does not need to process the second information or the information associated with the second data, and if the twenty-sixth information indicates that the twenty-fourth information includes the second information or the second data, the network device needs to process the second information or the information associated with the second data.

In some embodiments, the twenty-sixth information is defined explicitly. For example, the twenty-sixth information is explicitly included as a parameter in the definition of the twenty-fourth information, and the value of the twenty-sixth information determines whether there exists the second information or the information associated with the second data that needs to be processed.

In some embodiments, the second information or the information associated with the second data is an optional parameter in the definition of the twenty-fourth information, and an additional bit (e.g., a parameter annotation) in the definition of the optional parameter determines whether there exists the associated second information or the information associated with the second data. In this case, the twenty-sixth information can be implicitly indicated by the additional bit, which saves parameter resources.

In one data transmission process, the twenty-fourth information may include only the first information, only the second information, or both the first information and the second information. Therefore, the twenty-fourth information may include the twenty-seventh information indicating whether the currently-processed data is the first information or the second information, or indicating whether the currently-processed data is the first data or the second data. For example, each type of information may be in one-to-one correspondence with the twenty-seventh information, for example, each type of first information may be associated with one twenty-seventh information, and each type of second information may be associated with one twenty-seventh information.

Table 15 is an example of the twenty-fourth information. The first information and/or the second information in the twenty-fourth information illustrated in Table 15 are in one-to-one correspondence with the twenty-seventh information.

**Table 15**

| twenty-seventh information | first information | twenty-seventh information | second information | twenty-seventh information | first information |
|---|---|---|---|---|---|
| first value | corresponding value | second value | corresponding value | first value | corresponding value |

Referring to Table 15, the first twenty-seventh information of a "first value" indicates that the currently-processed data is the first information, the second twenty-seventh information of a "second value" indicates that the currently-processed data is the second information, and the third twenty-seventh information of a "first value" indicates that the currently-processed data is the first information. In addition, each type of first information or second information is associated with one twenty-seventh information.

It can be noted that the positions of multiple information in the twenty-fourth information illustrated in Table 15 are merely given as an example, and the disclosure is not limited in this regard. For example, the position of the twenty-seventh information can be swapped with the position of the associated first information or the position of the associated second information, that is, the twenty-seventh information may be located after the first information, or may be located after the second information.

It can be noted that the examples of the first information, the second information, the tenth information, and the twenty-fourth information provided in embodiments of the disclosure (such as Tables 3 to 15) are merely for ease of understanding, and the aforementioned information may include less or more information than those provided in embodiments of the disclosure. For example, the first information in Table 3 may further include the sixth information mentioned above, as illustrated in Table 16.

**Table 16**

| sixth information | seventh information | ninth information | seventh information | ninth information | seventh information | ninth information |
|---|---|---|---|---|---|---|
| corresponding value | first type of first data | No | second type of first data | No | third type of first data | Yes |

In embodiments of the disclosure, the data to-be-transmitted is decoupled from the data transmission path, that is, the data to-be-transmitted and the termination node for data transmission is being focused without strictly limiting the intermediate process of data transmission. In an information transmission dynamic routing mechanism introduced in embodiments of the disclosure, the network device can determine how to route the data to-be-transmitted according to dynamically flexible indication information sent by the terminal device (such as the node identification information and/or the node address information), so that a flexible data transmission path is implemented, and the information to-be-transmitted is not bound to a fixed message or a fixed transmission path, which helps to improve the robustness of information transmission of the network device. At the same time, the flexible data transmission path helps to reduce the workload when new transmission information is introduced into the standard.

In addition, in embodiments of the disclosure, the intermediate node for data transmission can only forward the data without decoding the data to-be-forwarded, and the target node decodes the corresponding data, so that effective encapsulation of transmission information is implemented. For example, the network device can determine the amount of data to-be-forwarded according to data length indication information sent by the terminal device, and avoid decoding information not used by the network device itself, which helps to simplify the function of the RRC protocol layer.

In some embodiments, any one of the aforementioned information may be carried by any one of the following message types, or any one of the aforementioned messages may be any one of the following messages: an NR Positioning Protocol A (NRPPa) message, an LTE positioning protocol (LPP) message, an NAS message, a radio resource control (RRC) message, a medium access control-control element (MAC CE) message, a downlink control information (DCI) message, an uplink control information (UCI) message, a physical uplink control channel (PUCCH) message, a physical uplink shared channel (PUSCH) message, an inter-node message, an Xn interface message, an F1 interface message, an E1 interface message, an NG interface message, a core network service-based message, or an AI-dedicated message.

In some embodiments, any one of the aforementioned information may be carried by any one of the following message types, or any one of the aforementioned messages may be any one of the following messages: a unicast message, a multicast message, or a broadcast message. A signal source can transmit the unicast message through a unicast channel, and only a terminal device allocated with corresponding unicast resources can attempt to receive the unicast message. The unicast message can also be referred to as dedicated signaling. A signal source can transmit the multicast message through a multicast channel, and a terminal device within the coverage of the multicast signal and being a group member can attempt to receive the multicast message. The terminal device obtains multicast channel-related resources upon joining a group. A signal source can transmit the broadcast message through a broadcast channel, and any terminal device within the coverage of the broadcast signal can attempt to receive the broadcast message.

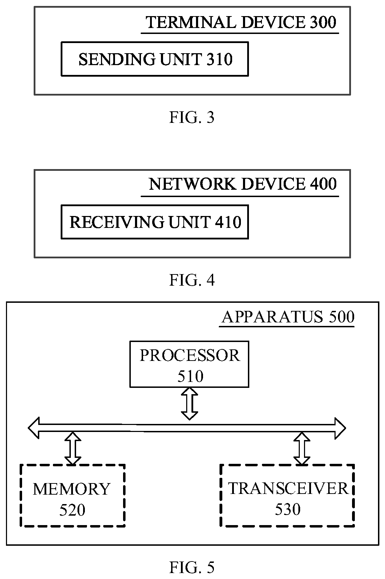

The method embodiments of the disclosure are described in detail above with reference to FIG. 1 and FIG. 2. The apparatus embodiments of the disclosure are described in detail below with reference to FIG. 3 to FIG. 5. It can be understood that the illustration of the method embodiments corresponds to the illustration of the apparatus embodiments. Therefore, for the parts not described in detail, reference can be made to the above method embodiments.

FIG. 3 is a schematic structural diagram of a terminal device provided by embodiments of the disclosure. A terminal device 300 may include a sending unit 310.

The sending unit 310 is configured to send first information and/or second information to a network device. The first information is associated with first data. The second information is associated with second data. The first data is to be processed by the network device. The second data is to be forwarded by the network device.

In some embodiments, the first information and the second information are associated with different transmission resources, and/or the first information and the second information are associated with different message types.

In some embodiments, the different transmission resources include one or more of: different logical channels, different SRBs, or different RBs.

In some embodiments, the first information and the second information are carried in different information fields in the same information.

In some embodiments, the first information includes third information. The third information indicates any one of: whether the first data is to be processed by a CU, whether the first data is to be processed by a DU, whether the first data is to be processed by an RRC protocol layer, whether the first data is to be processed by a non-RRC protocol layer, whether the first data is to be processed by a non-L3 protocol layer, or whether the first data is to be processed by an L3 protocol layer.

In some embodiments, when the third information indicates any one of: the first data being to be processed by the CU, the first data being to be processed by the RRC protocol layer, or the first data being to be processed by the L3 protocol layer, the first information includes one or more of: fourth information indicating a functional entity for processing and/or using the first data, fifth information indicating a message type associated with the first data, sixth information indicating a data type corresponding to the first data, or indicating a data type and a data format corresponding to the first data, seventh information being the first data, eighth information indicating a quantity of the first data sharing first control information, or ninth information indicating whether transmission of the first data ends.

In some embodiments, the first control information includes one or more of the fourth information, the fifth information, or the sixth information.

In some embodiments, the ninth information is in one-to-one correspondence with the first data.

In some embodiments, when the third information indicates any one of: the first data being not to be processed by the CU, the first data being to be processed by the DU, the first data being not to be processed by the RRC protocol layer, or the first data being not to be processed by the L3 protocol layer, the first information includes one or more of: tenth information being any one of information associated with the first data not to be processed by the CU, information associated with the first data to be processed by the DU, information associated with the first data not to be processed by the RRC protocol layer, or information associated with the first data not to be processed by the L3 protocol layer; or eleventh information indicating an information length of the tenth information.

In some embodiments, the tenth information includes one or more of: twelfth information indicating a functional entity for processing and/or using the first data, thirteenth information indicating a message type associated with the first data, fourteenth information indicating a data type corresponding to the first data, or indicating a data type and a data format corresponding to the first data, fifteenth information being the first data, sixteenth information indicating a quantity of the first data sharing second control information, or seventeenth information indicating whether transmission of the first data ends.

In some embodiments, the second control information includes one or more of the twelfth information, the thirteenth information, or the fourteenth information.

In some embodiments, the seventeenth information is in one-to-one correspondence with the first data.

In some embodiments, the second information includes one or more of: eighteenth information indicating information associated with a transmission path of the second data, nineteenth information indicating QoS information associated with the second data, twentieth information indicating a length of the second data, twenty-first information being the second data, twenty-second information indicating a quantity of the second data sharing third control information, or twenty-third information indicating whether transmission of the second data ends.

In some embodiments, the third control information includes one or more of the eighteenth information, the nineteenth information, or the twentieth information.

In some embodiments, the eighteenth information indicates a target node for transmission of the second data and/or an intermediate node for transmission of the second data.

In some embodiments, the eighteenth information indicates the target node and/or the intermediate node through one or more of: node category information, node identification information, or node address information.

In some embodiments, the transmission path of the second data is determined at least based on the QoS information associated with the second data.

In some embodiments, the QoS information associated with the second data includes one or more of: a data bit error rate, a data packet delay, a data packet loss rate, or a data priority level.

In some embodiments, the twenty-third information is in one-to-one correspondence with the second data.

In some embodiments, the first information and the second information are carried in different information fields in twenty-fourth information. The twenty-fourth information includes one or more of: twenty-fifth information indicating whether the twenty-fourth information includes the first information, twenty-sixth information indicating whether the twenty-fourth information includes the second information, or twenty-seventh information indicating whether currently-processed data is the first information or the second information.

FIG. 4 is a schematic structural diagram of a network device provided by embodiments of the disclosure. A network device 400 may include a receiving unit 410.

The receiving unit 410 is configured to receive first information and/or second information sent by a terminal device. The first information is associated with first data. The second information is associated with second data. The first data is to be processed by the network device. The second data is to be forwarded by the network device.

In some embodiments, the first information and the second information are associated with different transmission resources, and/or the first information and the second information are associated with different message types.

In some embodiments, the different transmission resources include one or more of: different logical channels, different SRBs, or different RBs.

In some embodiments, the first information and the second information are carried in different information fields in the same information.

In some embodiments, the first information includes third information. The third information indicates any one of: whether the first data is to be processed by a CU, whether the first data is to be processed by a DU, whether the first data is to be processed by an RRC protocol layer, whether the first data is to be processed by a non-RRC protocol layer, whether the first data is to be processed by a non-L3 protocol layer, or whether the first data is to be processed by an L3 protocol layer.

In some embodiments, when the third information indicates any one of: the first data being to be processed by the CU, the first data being to be processed by the RRC protocol layer, or the first data being to be processed by the L3 protocol layer, the first information includes one or more of: fourth information indicating a functional entity for processing and/or using the first data, fifth information indicating a message type associated with the first data, sixth information indicating a data type corresponding to the first data, or indicating a data type and a data format corresponding to the first data, seventh information being the first data, eighth information indicating a quantity of the first data sharing first control information, or ninth information indicating whether transmission of the first data ends.

In some embodiments, the first control information includes one or more of the fourth information, the fifth information, or the sixth information.

In some embodiments, the ninth information is in one-to-one correspondence with the first data.

In some embodiments, when the third information indicates any one of: the first data being not to be processed by the CU, the first data being to be processed by the DU, the first data being not to be processed by the RRC protocol layer, or the first data being not to be processed by the L3 protocol layer, the first information includes one or more of: tenth information being any one of information associated with the first data not to be processed by the CU, information associated with the first data to be processed by the DU, information associated with the first data not to be processed by the RRC protocol layer, or information associated with the first data not to be processed by the L3 protocol layer; or eleventh information indicating an information length of the tenth information.

In some embodiments, the tenth information includes one or more of: twelfth information indicating a functional entity for processing and/or using the first data, thirteenth information indicating a message type associated with the first data, fourteenth information indicating a data type corresponding to the first data, or indicating a data type and a data format corresponding to the first data, fifteenth information being the first data, sixteenth information indicating a quantity of the first data sharing second control information, or seventeenth information indicating whether transmission of the first data ends.

In some embodiments, the second control information includes one or more of the twelfth information, the thirteenth information, or the fourteenth information.

In some embodiments, the seventeenth information is in one-to-one correspondence with the first data.

In some embodiments, the second information includes one or more of: eighteenth information indicating information associated with a transmission path of the second data, nineteenth information indicating QoS information associated with the second data, twentieth information indicating a length of the second data, twenty-first information being the second data, twenty-second information indicating a quantity of the second data sharing third control information, or twenty-third information indicating whether transmission of the second data ends.

In some embodiments, the third control information includes one or more of the eighteenth information, the nineteenth information, or the twentieth information.

In some embodiments, the eighteenth information indicates a target node for transmission of the second data and/or an intermediate node for transmission of the second data.

In some embodiments, the eighteenth information indicates the target node and/or the intermediate node through one or more of: node category information, node identification information, or node address information.

In some embodiments, the transmission path of the second data is determined at least based on the QoS information associated with the second data.

In some embodiments, the QoS information associated with the second data includes one or more of: a data bit error rate, a data packet delay, a data packet loss rate, or a data priority level.

In some embodiments, the twenty-third information is in one-to-one correspondence with the second data.

In some embodiments, the first information and the second information are carried in different information fields in twenty-fourth information. The twenty-fourth information includes one or more of: twenty-fifth information indicating whether the twenty-fourth information includes the first information, twenty-sixth information indicating whether the twenty-fourth information includes the second information, or twenty-seventh information indicating whether currently-processed data is the first information or the second information.

In an optional embodiment, the above sending unit 310 and receiving unit 410 may be a transceiver 530. The terminal device 300 and the network device 400 may further include a processor 510 and a memory 520, which are specifically illustrated in FIG. 5.

FIG. 5 is a schematic structural diagram of a communication apparatus provided by embodiments of the disclosure. The dashed lines in FIG. 5 indicate that the unit or module is optional. An apparatus 500 may be configured to perform the methods in the above method embodiments. The apparatus 500 may be a chip, a terminal device, or a network device.

The apparatus 500 may include one or more processors 510. The processor 510 may support the apparatus 500 in implementing the methods in the above method embodiments. The processor 510 may be a general-purpose processor or a special-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gate or transistor logic devices, discrete hardware components, etc. A general-purpose processor may be a microprocessor, or the processor may be any conventional processor, or the like.

The apparatus 500 may further include one or more memories 520. The memory 520 is configured to store programs which, when executed by the processor 510, are operable with the processor 510 to perform the methods in the above method embodiments. The memory 520 may be a separate device independent of the processor 510, or may be integrated into the processor 510.

The apparatus 500 may further include a transceiver 530. The processor 510 may communicate with another device or chip through the transceiver 530. For example, the processor 510 may transmit and receive data with another device or chip through the transceiver 530.

A computer-readable storage medium is further provided in embodiments of the disclosure. The computer-readable storage medium is configured to store programs. The computer-readable storage medium is applicable to the terminal or network device provided in embodiments of the disclosure. The programs are operable with a computer to perform the methods performed by the terminal device or network device in various embodiments of the disclosure.

A computer program product is further provided in embodiments of the disclosure. The computer program product includes programs. The computer program product is applicable to the terminal or network device provided in embodiments of the disclosure. The programs are operable with a computer to implement the methods performed by the terminal or network device in various embodiments of the disclosure.

A computer program is further provided in embodiments of the disclosure. The computer program is applicable to the terminal device or network device provided in embodiments of the disclosure. The computer program is operable with a computer to perform the methods performed by the terminal device or network device in various embodiments of the disclosure.

It can be understood that the terms "system" and "network" in the disclosure can be used interchangeably. In addition, the terms used in the disclosure are merely intended for explaining specific embodiments of the disclosure rather than limiting the disclosure. The terms "first", "second", "third", "fourth", and the like used in the specification, the claims, and the accompanying drawings of the disclosure are used to distinguish different objects rather than to describe a particular order. Furthermore, the terms "include", "comprise" and "have" as well as any variations thereof are intended to cover non-exclusive inclusion.

In embodiments of the disclosure, the mentioned "indicate" may be a direct indication, may be an indirect indication, or may mean that there is an association relationship. For example, *A* indicates *B* may mean that *A* directly indicates *B*, for instance, *B* can be obtained according to *A*, may mean that *A* indirectly indicates *B*, for instance, *A* indicates *C*, and *B* can be obtained according to *C*, or may mean that that there is an association relationship between *A* and *B.*

In embodiments of the disclosure, the mentioned "include" may refer to a direct inclusion or an indirect inclusion. Optionally, "include" mentioned in embodiments of the disclosure may be replaced with "indicate" or "is used to determine". For example, *A* includes *B* may be replaced with *A* indicates *B*, or *A* is used to determine *B.*

In embodiments of the disclosure, "*B* corresponding to *A*" indicates that *B* is associated with *A*, and *B* may be determined according to *A.* However, it should be further understood that, "determine *B* according to *A*" does not mean that *B* is determined according to *A* only, and *B* may also be determined according to *A* and/or other information.

In embodiments of the disclosure, the term "correspondence" may mean that there is a direct or indirect correspondence between the two, may mean that there is an association relationship between the two, or may mean a relationship of indicating and indicated or configuring and configured, etc.

In embodiments of the disclosure, the "predefined" or "preconfigured" may be implemented by pre-saving a corresponding code or table in a device (e.g., including the terminal device and the network device) or in other manners that can be used for indicating related information. Specific implementation methods are not limited in the disclosure. For example, the "predefined" may mean defined in a protocol.

In embodiments of the disclosure, the "protocol" may refer to a communication standard protocol, which may include, for example, an LTE protocol, an NR protocol, and a related protocol applied to a future communication system. The disclosure is not limited in this regard.

In embodiments of the disclosure, the term "and/or" describes merely an association relationship between associated objects, which means that there may be three relationships. For example, *A* and/or *B* can mean *A* alone, both *A* and *B* exist, and *B* alone. In addition, the character "/" herein generally indicates that the associated objects are in an "or" relationship.

In various embodiments of the disclosure, the magnitude of a sequence number of each of the above processes does not imply an execution order. The execution order of each process should be determined according to function and internal logic thereof, which shall not constitute any limitation on the implementation of embodiments of the disclosure.

It can be understood that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The above elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for data transmission, comprising:
sending, by a terminal device, first information and/or second information to a network device, wherein the first information is associated with first data, the second information is associated with second data, the first data is to be processed by the network device, and the second data is to be forwarded by the network device.

2. The method of claim 1, wherein the first information and the second information are associated with different transmission resources, and/or the first information and the second information are associated with different message types.

3. The method of claim 2, wherein the different transmission resources comprise one or more of:
different logical channels;
different signaling radio bearers (SRBs); or
different radio bearers (RBs).

4. The method of claim 1, wherein the first information and the second information are carried in different information fields in the same information.

5. The method of any one of claims 1 to 4, wherein the first information comprises third information, and the third information indicates any one of:
whether the first data is to be processed by a centralized unit (CU);
whether the first data is to be processed by a distributed unit (DU);
whether the first data is to be processed by a radio resource control (RRC) protocol layer;
whether the first data is to be processed by a non-RRC protocol layer;
whether the first data is to be processed by a non-layer 3 (non-L3) protocol layer; or
whether the first data is to be processed by a layer 3 (L3) protocol layer.

6. The method of claim 5, wherein when the third information indicates any one of: the first data being to be processed by the CU, the first data being to be processed by the RRC protocol layer, or the first data being to be processed by the L3 protocol layer, the first information comprises one or more of:
fourth information indicating a functional entity for processing and/or using the first data;
fifth information indicating a message type associated with the first data;
sixth information indicating a data type corresponding to the first data, or indicating a data type and a data format corresponding to the first data;
seventh information being the first data;
eighth information indicating a quantity of the first data sharing first control information; or
ninth information indicating whether transmission of the first data ends.

7. The method of claim 6, wherein the first control information comprises one or more of the fourth information, the fifth information, or the sixth information.

8. The method of claim 6 or 7, wherein the ninth information is in one-to-one correspondence with the first data.

9. The method of claim 5, wherein when the third information indicates any one of: the first data being not to be processed by the CU, the first data being to be processed by the DU, the first data being not to be processed by the RRC protocol layer, or the first data being not to be processed by the L3 protocol layer, the first information comprises one or more of:
tenth information being any one of: information associated with the first data not to be processed by the CU, information associated with the first data to be processed by the DU, information associated with the first data not to be processed by the RRC protocol layer, or information associated with the first data not to be processed by the L3 protocol layer; or
eleventh information indicating an information length of the tenth information.

10. The method of claim 9, wherein the tenth information comprises one or more of:
twelfth information indicating a functional entity for processing and/or using the first data;
thirteenth information indicating a message type associated with the first data;
fourteenth information indicating a data type corresponding to the first data, or indicating a data type and a data format corresponding to the first data;
fifteenth information being the first data;
sixteenth information indicating a quantity of the first data sharing second control information; or
seventeenth information indicating whether transmission of the first data ends.

11. The method of claim 10, wherein the second control information comprises one or more of the twelfth information, the thirteenth information, or the fourteenth information.

12. The method of claim 10 or 11, wherein the seventeenth information is in one-to-one correspondence with the first data.

13. The method of any one of claims 1 to 12, wherein the second information comprises one or more of:
eighteenth information indicating information associated with a transmission path of the second data;
nineteenth information indicating quality of service (QoS) information associated with the second data;
twentieth information indicating a length of the second data;
twenty-first information being the second data;
twenty-second information indicating a quantity of the second data sharing third control information; or
twenty-third information indicating whether transmission of the second data ends.

14. The method of claim 13, wherein the third control information comprises one or more of the eighteenth information, the nineteenth information, or the twentieth information.

15. The method of claim 13 or 14, wherein the eighteenth information indicates a target node for transmission of the second data and/or an intermediate node for transmission of the second data.

16. The method of claim 15, wherein the eighteenth information indicates the target node and/or the intermediate node through one or more of:
node category information;
node identification information; or
node address information.

17. The method of any one of claims 13 to 16, wherein the transmission path of the second data is determined at least based on the QoS information associated with the second data.

18. The method of claim 17, wherein the QoS information associated with the second data comprises one or more of:
a data bit error rate;
a data packet delay;
a data packet loss rate; or
a data priority level.

19. The method of any one of claims 13 to 18, wherein the twenty-third information is in one-to-one correspondence with the second data.

20. The method of any one of claims 4 to 19, wherein the first information and the second information are carried in different information fields in twenty-fourth information, and the twenty-fourth information comprises one or more of:
twenty-fifth information indicating whether the twenty-fourth information comprises the first information;
twenty-sixth information indicating whether the twenty-fourth information comprises the second information; or
twenty-seventh information indicating whether currently-processed data is the first information or the second information.

21. A method for data transmission, comprising:
receiving, by a network device, first information and/or second information sent by a terminal device, wherein the first information is associated with first data, the second information is associated with second data, the first data is to be processed by the network device, and the second data is to be forwarded by the network device.

22. The method of claim 21, wherein the first information and the second information are associated with different transmission resources, and/or the first information and the second information are associated with different message types.

23. The method of claim 22, wherein the different transmission resources comprise one or more of:
different logical channels;
different signaling radio bearers (SRBs); or
different radio bearers (RBs).

24. The method of claim 21, wherein the first information and the second information are carried in different information fields in the same information.

25. The method of any one of claims 21 to 24, wherein the first information comprises third information, and the third information indicates any one of:
whether the first data is to be processed by a centralized unit (CU);
whether the first data is to be processed by a distributed unit (DU);
whether the first data is to be processed by a radio resource control (RRC) protocol layer;
whether the first data is to be processed by a non-RRC protocol layer;
whether the first data is to be processed by a non-layer 3 (non-L3) protocol layer; or
whether the first data is to be processed by a layer 3 (L3) protocol layer.

26. The method of claim 25, wherein when the third information indicates any one of: the first data being to be processed by the CU, the first data being to be processed by the RRC protocol layer, or the first data being to be processed by the L3 protocol layer, the first information comprises one or more of:
fourth information indicating a functional entity for processing and/or using the first data;
fifth information indicating a message type associated with the first data;
sixth information indicating a data type corresponding to the first data, or indicating a data type and a data format corresponding to the first data;
seventh information being the first data;
eighth information indicating a quantity of the first data sharing first control information; or
ninth information indicating whether transmission of the first data ends.

27. The method of claim 26, wherein the first control information comprises one or more of the fourth information, the fifth information, or the sixth information.

28. The method of claim 26 or 27, wherein the ninth information is in one-to-one correspondence with the first data.

29. The method of claim 25, wherein when the third information indicates any one of: the first data being not to be processed by the CU, the first data being to be processed by the DU, the first data being not to be processed by the RRC protocol layer, or the first data being not to be processed by the L3 protocol layer, the first information comprises one or more of:
tenth information being any one of: information associated with the first data not to be processed by the CU, information associated with the first data to be processed by the DU, information associated with the first data not to be processed by the RRC protocol layer, or information associated with the first data not to be processed by the L3 protocol layer; or
eleventh information indicating an information length of the tenth information.

30. The method of claim 29, wherein the tenth information comprises one or more of:
twelfth information indicating a functional entity for processing and/or using the first data;
thirteenth information indicating a message type associated with the first data;
fourteenth information indicating a data type corresponding to the first data, or indicating a data type and a data format corresponding to the first data;
fifteenth information being the first data;
sixteenth information indicating a quantity of the first data sharing second control information; or
seventeenth information indicating whether transmission of the first data ends.

31. The method of claim 30, wherein the second control information comprises one or more of the twelfth information, the thirteenth information, or the fourteenth information.

32. The method of claim 30 or 31, wherein the seventeenth information is in one-to-one correspondence with the first data.

33. The method of any one of claims 21 to 32, wherein the second information comprises one or more of:
eighteenth information indicating information associated with a transmission path of the second data;
nineteenth information indicating quality of service (QoS) information associated with the second data;
twentieth information indicating a length of the second data;
twenty-first information being the second data;
twenty-second information indicating a quantity of the second data sharing third control information; or
twenty-third information indicating whether transmission of the second data ends.

34. The method of claim 33, wherein the third control information comprises one or more of the eighteenth information, the nineteenth information, or the twentieth information.

35. The method of claim 33 or 34, wherein the eighteenth information indicates a target node for transmission of the second data and/or an intermediate node for transmission of the second data.

36. The method of claim 35, wherein the eighteenth information indicates the target node and/or the intermediate node through one or more of:
node category information;
node identification information; or
node address information.

37. The method of any one of claims 33 to 36, wherein the transmission path of the second data is determined at least based on the QoS information associated with the second data.

38. The method of claim 37, wherein the QoS information associated with the second data comprises one or more of:
a data bit error rate;
a data packet delay;
a data packet loss rate; or
a data priority level.

39. The method of any one of claims 33 to 38, wherein the twenty-third information is in one-to-one correspondence with the second data.

40. The method of any one of claims 24 to 39, wherein the first information and the second information are carried in different information fields in twenty-fourth information, and the twenty-fourth information comprises one or more of:
twenty-fifth information indicating whether the twenty-fourth information comprises the first information;
twenty-sixth information indicating whether the twenty-fourth information comprises the second information; or
twenty-seventh information indicating whether currently-processed data is the first information or the second information.

41. A terminal device, comprising:
a sending unit configured to send first information and/or second information to a network device, wherein the first information is associated with first data, the second information is associated with second data, the first data is to be processed by the network device, and the second data is to be forwarded by the network device.

42. The device of claim 41, wherein the first information and the second information are associated with different transmission resources, and/or the first information and the second information are associated with different message types.

43. The device of claim 42, wherein the different transmission resources comprise one or more of:
different logical channels;
different signaling radio bearers (SRBs); or
different radio bearers (RBs).

44. The device of claim 41, wherein the first information and the second information are carried in different information fields in the same information.

45. The device of any one of claims 41 to 44, wherein the first information comprises third information, and the third information indicates any one of:
whether the first data is to be processed by a centralized unit (CU);
whether the first data is to be processed by a distributed unit (DU);
whether the first data is to be processed by a radio resource control (RRC) protocol layer;
whether the first data is to be processed by a non-RRC protocol layer;
whether the first data is to be processed by a non-layer 3 (non-L3) protocol layer; or
whether the first data is to be processed by a layer 3 (L3) protocol layer.

46. The device of claim 45, wherein when the third information indicates any one of: the first data being to be processed by the CU, the first data being to be processed by the RRC protocol layer, or the first data being to be processed by the L3 protocol layer, the first information comprises one or more of:
fourth information indicating a functional entity for processing and/or using the first data;
fifth information indicating a message type associated with the first data;
sixth information indicating a data type corresponding to the first data, or indicating a data type and a data format corresponding to the first data;
seventh information being is the first data;
eighth information indicating a quantity of the first data sharing first control information; or
ninth information indicating whether transmission of the first data ends.

47. The device of claim 46, wherein the first control information comprises one or more of the fourth information, the fifth information, or the sixth information.

48. The device of claim 46 or 47, wherein the ninth information is in one-to-one correspondence with the first data.

49. The device of claim 45, wherein when the third information indicates any one of: the first data being not to be processed by the CU, the first data being to be processed by the DU, the first data being not to be processed by the RRC protocol layer, or the first data being not to be processed by the L3 protocol layer, the first information comprises one or more of:
tenth information being any one of: information associated with the first data not to be processed by the CU, information associated with the first data to be processed by the DU, information associated with the first data not to be processed by the RRC protocol layer, or information associated with the first data not to be processed by the L3 protocol layer; or
eleventh information indicating an information length of the tenth information.

50. The device of claim 49, wherein the tenth information comprises one or more of:
twelfth information indicating a functional entity for processing and/or using the first data;
thirteenth information indicating a message type associated with the first data;
fourteenth information indicating a data type corresponding to the first data, or indicating a data type and a data format corresponding to the first data;
fifteenth information being the first data;
sixteenth information indicating a quantity of the first data sharing second control information; or
seventeenth information indicating whether transmission of the first data ends.

51. The device of claim 50, wherein the second control information comprises one or more of the twelfth information, the thirteenth information, or the fourteenth information.

52. The device of claim 50 or 51, wherein the seventeenth information is in one-to-one correspondence with the first data.

53. The device of any one of claims 41 to 52, wherein the second information comprises one or more of:
eighteenth information indicating information associated with a transmission path of the second data;
nineteenth information indicating quality of service (QoS) information associated with the second data;
twentieth information indicating a length of the second data;
twenty-first information being the second data;
twenty-second information indicating a quantity of the second data sharing third control information; or
twenty-third information indicating whether transmission of the second data ends.

54. The device of claim 53, wherein the third control information comprises one or more of the eighteenth information, the nineteenth information, or the twentieth information.

55. The device of claim 53 or 54, wherein the eighteenth information indicates a target node for transmission of the second data and/or an intermediate node for transmission of the second data.

56. The device of claim 55, wherein the eighteenth information indicates the target node and/or the intermediate node through one or more of:
node category information;
node identification information; or
node address information.

57. The device of any one of claims 53 to 56, wherein the transmission path of the second data is determined at least based on the QoS information associated with the second data.

58. The device of claim 57, wherein the QoS information associated with the second data comprises one or more of:
a data bit error rate;
a data packet delay;
a data packet loss rate; or
a data priority level.

59. The device of any one of claims 53 to 58, wherein the twenty-third information is in one-to-one correspondence with the second data.

60. The device of any one of claims 44 to 59, wherein the first information and the second information are carried in different information fields in twenty-fourth information, and the twenty-fourth information comprises one or more of:
twenty-fifth information indicating whether the twenty-fourth information comprises the first information;
twenty-sixth information indicating whether the twenty-fourth information comprises the second information; or
twenty-seventh information indicating whether currently-processed data is the first information or the second information.

61. A network device, comprising:
a receiving unit configured to receive first information and/or second information sent by a terminal device, wherein the first information is associated with first data, the second information is associated with second data, the first data is to be processed by the network device, and the second data is to be forwarded by the network device.

62. The device of claim 61, wherein the first information and the second information are associated with different transmission resources, and/or the first information and the second information are associated with different message types.

63. The device of claim 62, wherein the different transmission resources comprise one or more of:
different logical channels;
different signaling radio bearers (SRBs); or
different radio bearers (RBs).

64. The device of claim 61, wherein the first information and the second information are carried in different information fields in the same information.

65. The device of any one of claims 61 to 64, wherein the first information comprises third information, and the third information indicates any one of:
whether the first data is to be processed by a centralized unit (CU);
whether the first data is to be processed by a distributed unit (DU);
whether the first data is to be processed by a radio resource control (RRC) protocol layer;
whether the first data is to be processed by a non-RRC protocol layer;
whether the first data is to be processed by a non-layer 3 (non-L3) protocol layer; or
whether the first data is to be processed by a layer 3 (L3) protocol layer.

66. The device of claim 65, wherein when the third information indicates any one of: the first data being to be processed by the CU, the first data being to be processed by the RRC protocol layer, or the first data being to be processed by the L3 protocol layer, the first information comprises one or more of:
fourth information indicating a functional entity for processing and/or using the first data;
fifth information indicating a message type associated with the first data;
sixth information indicating a data type corresponding to the first data, or indicating a data type and a data format corresponding to the first data;
seventh information being the first data;
eighth information indicating a quantity of the first data sharing first control information; or
ninth information indicating whether transmission of the first data ends.

67. The device of claim 66, wherein the first control information comprises one or more of the fourth information, the fifth information, or the sixth information.

68. The device of claim 66 or 67, wherein the ninth information is in one-to-one correspondence with the first data.

69. The device of claim 65, wherein when the third information indicates any one of: the first data being not to be processed by the CU, the first data being to be processed by the DU, the first data being not to be processed by the RRC protocol layer, or the first data being not to be processed by the L3 protocol layer, the first information comprises one or more of:
tenth information being any one of: information associated with the first data not to be processed by the CU, information associated with the first data to be processed by the DU, information associated with the first data not to be processed by the RRC protocol layer, or information associated with the first data not to be processed by the L3 protocol layer; or
eleventh information indicating an information length of the tenth information.

70. The device of claim 69, wherein the tenth information comprises one or more of:
twelfth information indicating a functional entity for processing and/or using the first data;
thirteenth information indicating a message type associated with the first data;
fourteenth information indicating a data type corresponding to the first data, or indicating a data type and a data format corresponding to the first data;
fifteenth information being the first data;
sixteenth information indicating a quantity of the first data sharing second control information; or
seventeenth information indicating whether transmission of the first data ends.

71. The device of claim 70, wherein the second control information comprises one or more of the twelfth information, the thirteenth information, or the fourteenth information.

72. The device of claim 70 or 71, wherein the seventeenth information is in one-to-one correspondence with the first data.

73. The device of any one of claims 61 to 72, wherein the second information comprises one or more of:
eighteenth information indicating information associated with a transmission path of the second data;
nineteenth information indicating quality of service (QoS) information associated with the second data;
twentieth information indicating a length of the second data;
twenty-first information being the second data;
twenty-second information indicating a quantity of the second data sharing third control information; or
twenty-third information indicating whether transmission of the second data ends.

74. The device of claim 73, wherein the third control information comprises one or more of the eighteenth information, the nineteenth information, or the twentieth information.

75. The device of claim 73 or 74, wherein the eighteenth information indicates a target node for transmission of the second data and/or an intermediate node for transmission of the second data.

76. The device of claim 75, wherein the eighteenth information indicates the target node and/or the intermediate node through one or more of:
node category information;
node identification information; or
node address information.

77. The device of any one of claims 73 to 76, wherein the transmission path of the second data is determined at least based on the QoS information associated with the second data.

78. The device of claim 77, wherein the QoS information associated with the second data comprises one or more of:
a data bit error rate;
a data packet delay;
a data packet loss rate; or
a data priority level.

79. The device of any one of claims 73 to 78, wherein the twenty-third information is in one-to-one correspondence with the second data.

80. The device of any one of claims 64 to 79, wherein the first information and the second information are carried in different information fields in twenty-fourth information, and the twenty-fourth information comprises one or more of:
twenty-fifth information indicating whether the twenty-fourth information comprises the first information;
twenty-sixth information indicating whether the twenty-fourth information comprises the second information; or
twenty-seventh information indicating whether currently-processed data is the first information or the second information.

81. A terminal device comprising a memory and a processor, wherein the memory is configured to store one or more computer programs, and the processor is configured to invoke the computer programs in the memory to perform the method of any one of claims 1 to 20.

82. A network device comprising a memory and a processor, wherein the memory is configured to store one or more computer programs, and the processor is configured to invoke the computer programs in the memory to perform the method of any one of claims 21 to 40.

83. An apparatus comprising a processor, wherein the processor is configured to invoke a program from a memory to perform the method of any one of claims 1 to 20 or claims 21 to 40.

84. A chip comprising a processor, wherein the processor is configured to invoke a program from a memory to cause a device equipped with the chip to perform the method of any one of claims 1 to 20 or claims 21 to 40.

85. A computer-readable storage medium configured to store a computer program, wherein the computer program is operable with a computer to perform the method of any one of claims 1 to 20 or claims 21 to 40.

86. A computer program product comprising a program, wherein the program is operable with a computer to perform the method of any one of claims 1 to 20 or claims 21 to 40.

87. A computer program operable with a computer to perform the method of any one of claims 1 to 20 or claims 21 to 40.
